(19) Europäisches Patentamt
European Patent Office
Office européen des brevets

(11) EP 2 205 643 B1

(12) **EUROPEAN PATENT SPECIFICATION**

(45) Date of publication and mention of the grant of the patent:
**25.01.2012 Bulletin 2012/04**

(21) Application number: **08841580.7**

(22) Date of filing: **22.10.2008**

(51) Int Cl.:
***C08F 2/32*** *(2006.01)*
***B01F 17/00*** *(2006.01)*
***C08F 220/06*** *(2006.01)*
***C08F 220/56*** *(2006.01)*
***C02F 1/00*** *(2006.01)*
***D21H 17/45*** *(2006.01)*

(86) International application number:
**PCT/EP2008/008897**

(87) International publication number:
**WO 2009/053029 (30.04.2009 Gazette 2009/18)**

(54) **INVERSE EMULSION POLYMERS CONTAINING A POLYMERIC COAGULANT**

EIN POLYMERISCHES KOAGULANS ENTHALTENDE INVERSE EMULSIONSPOLYMERE

POLYMÈRES EN ÉMULSION INVERSE CONTENANT UN COAGULANT POLYMÈRE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **23.10.2007 EP 07020693**

(43) Date of publication of application:
**14.07.2010 Bulletin 2010/28**

(73) Proprietor: **Ashland Licensing and Intellectual Property LLC**
**Dublin, OH 43017 (US)**

(72) Inventors:
- **SCHULTE, Johann**
**47803 Krefeld (DE)**
- **BELLMANN, Susanne**
**40882 Ratingen (DE)**
- **MOSKWA, Frank**
**47058 Duisburg (DE)**

(74) Representative: **Bülle, Jan et al**
**Kutzenberger & Wolff**
**Patentanwaltssozietät**
**Theodor-Heuss-Ring 23**
**50668 Köln (DE)**

(56) References cited:
**EP-A- 0 262 945**
**EP-A- 0 819 651**
**US-A- 4 464 508**
**US-A1- 2002 188 040**
**US-A1- 2004 143 039**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

FIELD OF THE INVENTION

The invention relates to water-in-oil polymer dispersions that are useful as flocculants, dewatering (drainage) aids and retention aids in papermaking.

BRIEF DESCRIPTION OF THE PRIOR ART

Conventional emulsion polymerization generally involves an oil phase finely dispersed in a continuous water phase (oil-in-water polymer dispersion).

In inverse emulsion polymerization water-soluble polymers are produced in a dispersed water phase within a continuous oil phase (water-in-oil polymer dispersion). The polymer formed remains in the dispersed water droplets and does not significantly affect the viscosity of the emulsion. The products contain polymers with a high average molecular weight but exhibit low viscosities. This not only offers an advantage over ordinary emulsions but offers an advantage over forming a dry product. This is because the inverse emulsion is of low viscosity for easy handling and can be quite concentrated for easy transportation. It is easily possible to dilute with a suitable quantity of water and break the emulsion. When the water content of the water-in-oil polymer dispersion is comparatively high, only minor amounts of water are needed in order to invert the water-in-oil emulsion into an oil-in-water emulsion. Since the polymer is formed in small droplets in the inverse emulsion and is already in solution, it easily disperses in the water thereby dramatically increasing the viscosity.

When dispersing the inverse emulsion into an aqueous system, the amount of water suddenly increases. This causes the polymer coils to unfold and in consequence, the viscosity of the system is substantially increased, although the emulsion is substantially diluted. For example, when pouring 1 ml of a water-in-oil emulsion into a volume of 50 ml of water (dilution factor 50) the viscosity of the resulting oil-in-water emulsion is still increased, e.g. 3-fold.

Water-in-oil polymer dispersions containing water-soluble homopolymers and water-soluble copolymers are already widely used today, for example as flocculation agents in the sedimentation of solids, in particular in water and process water treatment or effluent treatment, in raw material extraction, chiefly of coal, aluminum and petroleum, or as auxiliary agents in the sugar industry and in paper production.

In the manufacture of paper, a papermaking furnish, i.e. an aqueous slurry of cellulosic fiber having a water content of usually more than 95 wt.-% is formed into a paper sheet typically having a water content of less than 5 wt.-%. Hence the dewatering and retention aspects of papermaking are important to the efficiency and cost of the manufacture.

Dewatering by sedimentation is the preferred method of drainage because of its relatively low cost. After gravity drainage further methods are used for dewatering, for instance vacuum, pressing, felt blanket blotting and pressing, evaporation and the like. In actual practice a combination of such methods is employed to dewater, or dry, the sheet to the desired water content. Since gravity drainage is both the first dewatering method employed and the least expensive, an improvement in the efficiency of this drainage process will decrease the amount of water required to be removed by other methods and hence improve the overall efficiency of dewatering and reduce the cost thereof.

Various chemical additives have been utilized in an attempt to increase the rate at which water drains from the formed sheet, and to increase the amount of fines and filler retained on the sheet. Flocculants and drainage aids are extensively used to optimize the separation of the solid phase from the liquid phase in the aqueous suspensions. The use of high molecular weight water-soluble polymers is a significant improvement in the manufacture of paper. These high molecular weight polymers act as flocculants, forming large flocs which deposit on the sheet. They also aid in the dewatering of the sheet.

These high molecular weight water-soluble polymers may be employed as, e.g., water-in-oil polymer dispersions or water-in-water polymer dispersions.

For example, US 5,292,800 discloses water-in-oil emulsions of water-soluble or water-swellable polymers, in which the oil phase of the emulsion consists of not less than 50% by weight of an oil of vegetable or animal origin. The water-in-oil polymer emulsions can be used as retention agents and drainage aids in the production of paper, board and cardboard.

US 6,117,938 discloses water-in-oil polymer emulsions in which the aqueous phase comprises a blend of high molecular weight, water-soluble cationic structured polymers with high molecular weight, water-soluble, cationic polymers which either are linear or which have a lower degree of structure. The polymer blends are useful for the drainage of cellulosic suspensions such as those found in paper production.

EP-A 0 262 945 discloses the formation of homogeneous blends of different water soluble polymer types by forming one of the polymers from monomeric starting material by polymerization in a solution of the other polymer. A blend of a polyamine polymer with a water-soluble polyamine, which is made by polymerization of suitable amino or halogen compounds, often together with dimethylamine, with epichlorhydrin, is of particular value for sizing paper.

US 2004/0034145 discloses a method for manufacturing a water-in-water polymer dispersion containing polymer A and at least one polymeric dispersant B, according to which monomers, which are dispersed in an aqueous phase containing water-soluble dispersant B, are subjected to radical polymerization. The obtainable water-in-water polymer dispersions are excellent retention agents and drainage aids in papermaking.

WO 02/083743 and US 2005/0183837 disclose a water-soluble interjacent complex that includes a first water-soluble polymer and one or more water-soluble monomers polymerized to form a second water-soluble polymer in the presence of the first water-soluble polymer. The interjacent complexes can be used in paper manufacture. The interjacent complex is added to at a suitable location on the paper machine to aid in forming the sheet and promoting dewatering of the formed sheet.

EP 819 651 discloses a sludge dewatering composition that is prepared by (i) forming an aqueous solution of a water soluble nonionic monomer, a cationic comonomer, and a cationic polymer, (ii) emulsifying the aqueous solution in a sufficient quantity of hydrocarbon oil to form a water-in-oil emulsion, and (iii) polymerizing the monomers.

EP 807 646 discloses a process for preparing a water-absorbent resin which enables the water-absorbent resin to ensure the reduction in the release amount of liquid and the increase in the liquid diffusibility. In the preparation process, the water-absorbent resin is prepared by polymerization of a water-soluble ethylenic unsaturated monomer. The polymerization of the water-soluble ethylenic unsaturated monomer is allowed to take place in the presence of a water-absorbent resin having a water-absorbing rate different from that of a water-absorbent resin resulting from polymerization of the water-soluble ethylenic unsaturated monomer. In a preferred mode, the polymerization is performed by a reversed-phase suspension polymerization method.

US 2002/188040 discloses a water-soluble interjacent complex that includes a first water-soluble polymer and one or more water-soluble monomers polymerized to form a second water-soluble polymer in the presence of the first water-soluble polymer. The water-soluble interjacent complex forms a solution in water that is free of insoluble polymer particles. The interjacent complexes may be used to treat a waste sludge by adding an effective amount thereof to the waste sludge. The interjacent complexes may also be used in making paper by adding an effective amount thereof to a pulp or a forming sheet at a suitable location on a paper making machine. The interjacent complexes may further be used as a rheology modifier in aqueous systems by adding an effective amount thereof to an aqueous medium to effect a desired viscosity, rheology, or flow curve property.

There is continuing need to develop new retention and dewatering (drainage) aids to increase the efficiency of pulp or paper manufacture.

## SUMMARY OF THE INVENTION

It has been surprisingly found that water-in-oil polymer dispersions exhibiting improved retention and dewatering (drainage) characteristics are obtainable by a process comprising the steps of

(a) preparing a water-in-oil monomer dispersion comprising water, an oily substance, a water-in-oil emulsifier, a polymeric coagulant, a radically polymerizable (alk)acrylic acid derivative, and optionally one or more radically polymerizable, ethylenically unsaturated co-monomers; and

(b) radically polymerizing the radically polymerizable (alk)acrylic acid derivative and the optionally present one or more radically polymerizable, ethylenically unsaturated co-monomers thereby yielding an intercalated polymer;

wherein the polymeric coagulant is derived from at least one cationic monomer selected from the group consisting of (alk)acrylamidoalkyltrialkyl ammonium halides, (alk)acryloyloxyalkyl trialkyl ammonium halides, and alkenyl trialkyl ammonium halides.

The *in situ* polymerization of the radically polymerizable (alk)acrylic acid derivative in the water-in-oil monomer dispersion containing the polymeric coagulant yields a water-in-oil polymer dispersion wherein the polymer product is intercalated in the polymeric coagulant (interpenetrating complex).

Water-in-oil polymer dispersions of this type are not obtainable by polymerizing the monomers in absence of the polymeric coagulant and adding the polymeric coagulant thereafter, but require the presence of the polymeric coagulant during the polymerization reaction.

Otherwise, different products exhibiting different properties are obtained. In particular, on the one hand, when adding an aqueous dispersion of a polymeric coagulant to a water-in-oil dispersion that has been obtained separately by polymerizing a radically polymerizable (alk)acrylic acid derivative and optionally one or more radically polymerizable, ethylenically unsaturated co-monomers, the water contained in the aqueous dispersion of the polymeric coagulant increases the water content of the resultant mixture. Typically, the additional water converts the water-in-oil polymer dispersion into an oil-in-water polymer dispersion or at least causes the formation of clods or grains. On the other hand, when adding a powder of the polymeric coagulant (i.e. in the absence of water in order to not influence the water: oil

ratio), it is practically impossible to dissolve the polymeric coagulant in the water phase of the water-in-oil polymer dispersion.

The water content of the water-in-oil polymer dispersions according to the invention is well balanced. On the one hand, the water content is sufficiently high in order to allow for polymerization under stable conditions - if the water content during polymerization is too low, dissipation of heat is inefficient and causes severe problems. On the other hand, the water content is sufficiently low in order to keep costs for transportation low.

BRIEF DESCRIPTION OF THE DRAWINGS

Figure 1 shows the total retention values and the ash retention values of certain water-in-oil polymer dispersions according to the invention in comparison to conventional water-in-oil polymer dispersions.

Figures 2 to 6 show the dewatering (drainage) performance of the water-in-oil polymer dispersions according to the invention in comparison to dispersions of the prior art.

DETAILED DESCRIPTION OF THE INVENTION

A first aspect of the invention relates to a process for the preparation of a water-in-oil polymer dispersion comprising the steps of

(a) preparing a water-in-oil monomer dispersion comprising water, an oily substance, a water-in-oil emulsifier, a polymeric coagulant, a radically polymerizable (alk)acrylic acid derivative, and optionally one or more radically polymerizable, ethylenically unsaturated co-monomers; and

(b) radically polymerizing the radically polymerizable (alk)acrylic acid derivative and the optionally present one or more radically polymerizable, ethylenically unsaturated co-monomers thereby yielding an intercalated polymer;

wherein the polymeric coagulant is derived from at least one cationic monomer selected from the group consisting of (alk)acrylamidoalkyltrialkyl ammonium halides, (alk)acryloyloxyalkyl trialkyl ammonium halides, and alkenyl trialkyl ammonium halides.

The term "water-in-oil dispersion" is well accepted in the art. Usually, the term refers to dispersions (emulsions) wherein the continuous phase is oil and the discontinuous phase is water, the discontinuous water phase being dispersed in the continuous oil phase. Preferably, the "water-in-oil monomer dispersion" according to the invention comprises at least water, an oily substance, a radically polymerizable (alk)acrylic acid derivative, a water-in-oil emulsifier, a polymeric coagulant, and optionally one or more radically polymerizable, ethylenically unsaturated co-monomers. Similarly, preferably, the "water-in-oil polymer dispersion" according to the invention comprises at least water, an oily substance, a water-in-oil emulsifier, a polymeric coagulant and a polymer obtained by radical polymerization of a radically polymerizable (alk)acrylic acid derivative and optionally one or more radically polymerizable, ethylenically unsaturated co-monomers. Each of the above components will be more completely described and defined hereinafter.

Chemical coagulation, the alteration of suspended and colloidal particles so they adhere to each other, is one type of chemical treatment process. Coagulation is a process that causes the neutralization of charges or a reduction of the repulsion forces between particles. Flocculation is the aggregation of particles into larger agglomerations ("flocs"). Coagulation is virtually instantaneous, while flocculation requires some time for the flocs to develop. For the purpose of the specification, the term "polymeric coagulant" preferably refers to a water-soluble or water-dispersible, preferably highly ionic, polymer of comparatively low molecular weight. When the overall electrical charge associated with particles and organic matter in water is negative, e.g. the cellulosic fiber suspension processed in papermaking, positively charged coagulants are preferably added to neutralize the electrical charge. The polymeric coagulant as well as the intercalated polymer can serve as coagulant and/or flocculant.

For the purpose of the specification, the term "water-soluble" preferably refers to a solubility in pure water at ambient temperature of at least 10 g $l^{-1}$, more preferably at least 25 g $l^{-1}$, still more preferably at least 50 g $l^{-1}$, yet more preferably at least 100 g $l^{-1}$, most preferably at least 250 g $l^{-1}$ and in particular at least 500 g $l^{-1}$.

For the purpose of the specification, the term "intercalated polymer" refers to the polymer that is obtainable by an *in situ* polymerization reaction wherein a monomer composition comprising a radically polymerizable (alk)acrylic acid derivative and optionally one or more radically polymerizable, ethylenically unsaturated co-monomers is polymerized in the presence of a polymeric coagulant.

It should be emphasized that the presence of the polymeric coagulant during the radical polymerization of the (alk)acrylic acid derivative and the optionally present one or more radically polymerizable, ethylenically unsaturated co-monomers is essential for the properties of the resultant water-in-oil polymer dispersion. Identical water-in-oil polymer dispersions are not obtainable by polymerizing the monomers in absence of the polymeric coagulant and adding the polymeric coagulant thereafter. The polymeric coagulant is part of a water-in-oil dispersion into which the intercalated polymer is polymerized from the (alk)acrylic acid derivative and the optionally present one or more radically polymerizable, ethylenically unsaturated co-monomers. In other words, the intercalated polymer obtained by the polymerization reaction is somehow embedded in the polymeric coagulant which is initially present.

The internal structure of the resulting interpenetrating polymer system of the polymeric coagulant and the intercalated polymer, however, may not be reproduced by simply mixing a polymeric coagulant and a polymer separately obtained from the same monomers as the intercalated polymer.

The water-in-oil monomer dispersion according to the invention comprises water, preferably deionized water. The water content may vary from 0.01 to 99.99 wt.-%. Preferably, the water content is within the range of from 10 to 90 wt.-%, more preferably 15 to 85 wt.-%, still more preferably 20 to 80 wt.-%, yet more preferably 25 to 75 wt.-%, most preferably 30 to 70 wt.% and in particular 35 to 65 wt.-%, based on the total weight of the water-in-oil monomer dispersion. In a preferred embodiment, the water content is within the range of from 30 to 50 wt.-%, more preferably 32 to 48 wt.-%, still more preferably 34 to 46 wt.-%, yet more preferably 36 to 44 wt.-%, most preferably 38 to 42 wt.-% and in particular 39 to 41 wt.-%, based on the total weight of the water-in-oil monomer dispersion.

The water-in-oil monomer dispersion according to the invention further comprises one or more oily substances. Preferably, the oily substance is an inert organic liquid substantially immiscible with water (oil phase). In this regard, "substantially immiscible with water" means that the solubility of the pure oily substance in pure water at ambient temperature is preferably below 10 mg $l^{-1}$, more preferably below 1.0 mg $l^{-1}$, still more preferably below 0.1 mg $l^{-1}$, yet more preferably below 0.01 mg $l^{-1}$, most preferably below 1.0 $10^{-3}$ mg $l^{-1}$ and in particular below 1.0 $10^{-4}$ mg $l^{-1}$. The term "inert" means that the oily substance as such preferably does not contain radically polymerizable ethylenically unsaturated functional groups. The content of the oily substance may vary from 0.01 to 99.99 wt.-%. Preferably, the content of the oily substance is within the range of from 0.1 to 60 wt.%, more preferably 1.0 to 55 wt.-%, still more preferably 2.5 to 50 wt.-%, yet more preferably 5.0 to 45 wt.-%, most preferably 10 to 40 wt.-% and in particular 15 to 35 wt.%, based on the total weight of the water-in-oil monomer dispersion. In a preferred embodiment, the content of the oily substance is within the range of from 14 to 34 wt.-%, more preferably 16 to 32 wt.-%, still more preferably 18 to 30 wt.%, yet more preferably 20 to 28 wt.-%, most preferably 22 to 26 wt.-% and in particular 23 to 25 wt.-%, based on the total weight of the water-in-oil monomer dispersion.

The oily substance may be a substantially pure compound or a mixture of various compounds. The oily substance can be any inert aliphatic and/or aromatic hydrophobic liquid which does not interfere with the radical polymerization reaction. Examples of such hydrophobic liquids include benzene, xylene, toluene, mineral oils, paraffins, isoparaffinic oils, kerosenes, naphtas, waxes, vegetable oils, and the like, and mixtures thereof. Preferably, the oily substance is a linear, cyclic and/or branched hydrocarbon, preferably containing 6 to 30 carbon atoms, more preferably 8 to 24 carbon atoms, still more preferably 10 to 22 carbon atoms, most preferably 12 to 20 carbon atoms and in particular 14 to 18 carbon atoms. Preferably the hydrocarbon is aliphatic. Preferably, the oily substance has a density below 1.0 g $ml^{-1}$, more preferably below 0.9 g $ml^{-1}$, still more preferably below 0.85 g $ml^{-1}$, most preferably below 0.83 g $ml^{-1}$ and in particular below 0.82 g $ml^{-1}$. Preferably, the oily substance has a pour point (solidifying point) within the range of from -150°C to 50°C, more preferably -120°C to 20°C, still more preferably -100°C to 0°C, most preferably -90°C to -50°C and in particular -80°C to -60°C.

In a preferred embodiment, the oily substance comprises one or more aliphatic hydrocarbons selected from the group consisting of dodecane, tridecane, tetradecane, pentadecane, hexadecane, heptadecane, octadecane, nonadecane and eicosane, hexadecane being particularly preferred. A suitable oily substance is a mixture of $C_{16}$-$C_{20}$ hydrocarbons which is preferably free of aromatics and preferably comprises not more than 2 wt.-% $C_{15}$-hydrocarbons, at least about 60 wt.-% $C_{16}$-hydrocarbons and not more than about 40 wt.-% $C_{17}$-hydrocarbons.

In another preferred embodiment, the oily substance comprises an oil of vegetable or animal origin, such as mono-, di- and triglycerides, pure or as a mixture, for example in the form of oily extracts of natural products, for example olive oil, soybean oil, sunflower oil, castor oil, sesame oil, corn oil, groundnut oil, rapeseed oil, linseed oil, almond oil, colza oil, safflower oil, and their raffinates, for example hydrogenated or partially hydrogenated products thereof and/or their esters, in particular methyl and ethyl esters. The oily substance may also comprise a mixture of aliphatic hydrocarbons and vegetable oils.

In still another preferred embodiment, the oily substance comprises fatty acid esters. Esters of linear saturated fatty acids, in particular fatty acids having an alkyl chain length of more than 11 carbon atoms, preferably lauric, myristic, palmitic, stearic and oleic acid, with alcohols are particularly preferably used. The fatty acid esters are used alone or preferably in combination with a hydrocarbon or a mixture of hydrocarbons.

The water-in-oil monomer dispersion according to the invention further comprises one ore more water-in-oil emulsifiers. An emulsifier is a substance which stabilizes an emulsion, frequently a surfactant. Preferably, the water-in-oil emulsifier has a HLB (hydrophilic-lipophilic balance) value within the range of from 2 to 9, more preferably 3 to 8, still

more preferably 3.5 to 7.5, most preferably 4 to 7 and in particular 4.0 to 6.5 (for the definition of the HLB value, see W.C. Griffin, Journal of the Society of the Cosmetic Chemist, 1 (1950), 311). Preferably, the content of the water-in-oil emulsifier is within the range of from 0.01 to 25 wt.-%, more preferably 0.1 to 10 wt.-%, still more preferably 0.5 to 5.0 wt.-%, yet more preferably 1.0 to 4.0 wt.-%, most preferably 1.5 to 3.5 wt.-% and in particular 1.8 to 3.0 wt.-%, based on the total weight of the water-in-oil monomer dispersion. Preferably, the relative weight ratio of the oily substance to the water-in-oil emulsifier is within the range of from 30:1 to 2:1, more preferably 25:1 to 3:1, most preferably 20:1 to 4: 1 and in particular 15:1 to 5:1.

Suitable water-in-oil emulsifiers are known to the skilled artisan. Anionic, cationic, zwitterionic or non-ionic surfactants may be used as water-in-oil emulsifier, non-ionic surfactants being preferred. Examples of water-in-oil emulsifiers include alkoxylated reaction products of glycidyl ethers with polyhydric alcohols; fatty esters of mono-, di- and polyglycerols, such as monooleate, dioleate, monostearate, distearate and palmitate stearate; sorbitan fatty esters, such as sorbitan monooleate, sorbitan dioleate, sorbitan trioleate, sorbitan monostearate and sorbitan tristearate; fatty esters of pentaerythritol, such as pentaerythrityl monomyristate, pentaerythrityl monopalmitate or pentaerythrityl dipalmitate; polyethylene glycol sorbitan fatty esters, such as the monooleates; polyethylene glycol mannitol fatty esters, such as monooleates and trioleates; glucose fatty esters, such as glucose monooleate and glucose monostearate; trimethylolpropane distearate; reaction products of isopropylamide with oleic acid; glycerol sorbitan fatty esters; alkanolamides, hexadecyl sodium phthalate and decyl sodium phthalate. Preferably, the water-in-oil emulsifier is selected from the group consisting of sorbitan fatty acid esters and polyoxyethylene sorbitan fatty acid esters.

In a preferred embodiment, the water-in-oil monomer dispersion according to the invention further comprises a second emulsifier. Preferably, the second emulsifier has a HLB (hydrophilic-lipophilic balance) value within the range of from 7 to 16, more preferably 8 to 15, still more preferably 9 to 14, most preferably 9.5 to 13.5 and in particular 10 to 13. Preferably, the content of the second emulsifier is within the range of from 0.005 to 25 wt.-%, more preferably 0.01 to 10 wt.-%, still more preferably 0.05 to 5.0 wt.-%, yet more preferably 0.1 to 2.0 wt.-%, most preferably 0.3 to 1.5 wt.-% and in particular 0.5 to 1.0 wt.-%, based on the total weight of the water-in-oil monomer dispersion.

Examples of second emulsifiers include ethoxylated alcohols, such as fatty alcohol ethoxylates; fatty esters of mannitol, such as mannityl monolaurate or mannityl monopalmitate; ethoxylated alkylamines; and alkylphenol ethoxylates.

The water-in-oil monomer dispersion according to the invention further comprises one ore more polymeric coagulants wherein at least one polymeric coagulant is derived from at least one cationic monomer selected from the group consisting of (alk)acrylamidoalkyltrialkyl ammonium halides, (alk)acryloyloxyalkyl trialkyl ammonium halides, and alkenyl trialkyl ammonium halides.

Preferably, the polymeric coagulant is water-soluble or water-swellable. Preferably, the content of the polymeric coagulant is within the range of from 0.01 to 30 wt.-%, more preferably 0.1 to 20 wt.-%, still more preferably 0.5 to 15 wt.-%, yet more preferably 1.0 to 10 wt.-%, most preferably 3.0 to 8.0 wt.-% and in particular 4.5 to 6.5 wt.-%, based on the total weight of the water-in-oil monomer dispersion.

Preferably, the polymeric coagulant exhibits a degree of polymerization of at least 90%, more preferably at least 95%, still more preferably at least 98%, yet more preferably at least 99%, most preferably at least 99.5% and in particular at least 99.9%.

Preferably, the weight average molecular weight $M_w$ of the polymeric coagulant is within the range of from 50,000 to 1,500,000 g $mol^{-1}$, more preferably 75,000 to 1,250,000 g $mol^{-1}$, still more preferably 100,000 to 1,000,000 g $mol^{-1}$, yet more preferably 120,000 to 750,000 g $mol^{-1}$, most preferably 140,000 to 400,000 g $mol^{-1}$ and in particular 150,000 to 200,000 g $mol^{-1}$. In a preferred embodiment, the weight average molecular weight $M_w$ of the polymeric coagulant is within the range of from 75,000 to 350,000 g $mol^{-1}$.

Preferably, the molecular weight dispersity $M_w/M_n$ of the polymeric coagulant is within the range of from 1.0 to 4.0, more preferably 1.5 to 3.5 and in particular 1.8 to 3.2.

Preferably, the polymeric coagulant has a product viscosity (spindle I/10 rpm, 20°C, RVT DV-2 viscosimeter) within the range of from 100 to 850 mPas, more preferably 150 to 800 mPas, still more preferably 200 to 750 mPas, yet more preferably 250 to 700 mPas, most preferably 300 to 650 mPas and in particular 350 to 600 mPas.

In a preferred embodiment the polymeric coagulant is a homopolymer or a copolymer. When the polymeric coagulant is a copolymer, it is preferably derived from at least one cationic monomer and at least one non-ionic comonomer (see below).

In this regard, "derived from" means that the polymer backbone of the polymeric coagulant comprises repetition units, i.e., repetition units are incorporated in the polymer backbone of the polymeric coagulant, which repetition units are formed from the corresponding monomers in the course of the polymerization reaction. For example, when the polymeric coagulant is derived from dimethylaminopropyl acrylamide quatemized with methylchloride (DIMAPA quat.), the following repetition unit is incorporated in the polymer backbone:

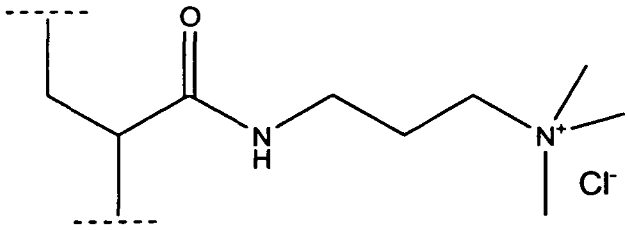

When the polymeric coagulant is a copolymer of at least one cationic monomer (e.g. DIMAPA quat.) and at least one non-ionic co-monomer (e.g. acrylamide), the content of the cationic monomer is preferably at least 50 wt.%, more preferably at least 60 wt.-%, still more preferably at least 70 wt.-%, yet more preferably at least 80 wt.-%, most preferably at least 90 wt.-% and in particular at least 95 wt.-%, based on the total weight of all monomers incorporated in the polymeric coagulant.

Preferably, the polymeric coagulant is derived from one or more cationic monomers, more preferably from a single cationic monomer.

The polymeric coagulant is derived from one or more cationic monomers selected from the group consisting of (alk)acrylamidoalkyltrialkyl ammonium halides, (alk)acryloyloxyalkyl trialkyl ammonium halides and alkenyl trialkyl ammonium halides. Preferably, the aforementioned cationic monomers comprise 6 to 25 carbon atoms, more preferably 7 to 20 carbon atoms, most preferably 7 to 15 carbon atoms and in particular 8 to 12 carbon atoms.

Preferably, the polymeric coagulant is derived (synthesized) from

- 30 to 100 wt.% of (alk)acrylamidoalkyltrialkyl ammonium halides, (alk)acryloyl-oxyalkyl trialkyl ammonium halides and/or alkenyl trialkyl ammonium halides, and

- 0 to 70 wt.% of nonionic co-monomers.

In a preferred embodiment, the polymeric coagulant is derived from a monomer according to general formula (I)

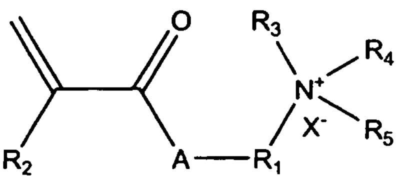 (I)

wherein

$R_1$ is linear or branched $C_{1-8}$ alkylene, preferably ethyl, propyl, butyl or pentyl;
$R_2$, $R_3$, $R_4$ and $R_5$ are independently of one another hydrogen, $C_1$-$C_6$ alkyl, preferably methyl, ethyl or propyl; $C_5$-$C_{10}$ aryl, preferably phenyl; or $C_6$-$C_{16}$ arylalkyl, preferably benzyl;
A is O, NH or $NR_6$ with $R_6$ being $C_1$-$C_6$ alkyl, preferably NH; and
X is halogen, pseudohalogen, alkylcarboxylate or alkylsulfate, preferably chlorine.

Preferably, $R_3$, $R_4$ and $R_5$ are identical. In a preferred embodiment, A is O or NH, $R_1$ is ethylene or propylene, $R_2$ is hydrogen or methyl, and $R_3$, $R_4$ and $R_5$ are methyl. The monomer according to general formula (I) may be an ester (A = O), such as dimethylaminoethyl (meth)acrylate quatemized with methylchloride (ADAME quat.). Preferably, however, the monomer according to general formula (I) is an amide (A = NH), particularly dimethylaminopropyl acrylamide quatemized with methylchloride (DIMAPA quat).

Preferably, protonated or quaternized dialkylaminoalkyl (meth)acrylates or dialkylaminoalkyl(meth)acrylamides with 1 to 3 C atoms in the alkyl or alkylene groups are employed as monomers according to general formula (I), more preferably the methyl chloride-quatemized ammonium salt of dimethylaminopropyl (mete)-acrylate, dimethylaminoethyl (meth)acrylate, dimethylaminomethyl (meth)acrylate, dimethyl amino ethyl(meth)acrylamide and/or dimethylaminopropyl (meth)acrylamide. It is preferred to use dimethylaminoethyl acrylate and dimethylaminopropyl acrylamide.

The basic monomers are used in a form neutralized with mineral acids or organic acids or in a quaternized form, such quaternization preferably being effected using dimethyl sulfate, diethyl sulfate, methyl chloride, ethyl chloride or benzyl chloride. In a preferred embodiment, monomers quatemized with methyl chloride or benzyl chloride are used.

When the polymeric coagulant is a copolymer or terpolymer, it is preferably derived from at least one cationic monomer selected from the group consisting of (alk)acrylamidoalkyltrialkyl ammonium halides, (alk)acryloyloxyalkyl trialkyl ammonium halides, and alkenyl trialkyl ammonium halides; in combination with at least one non-ionic co-monomer. Suitable non-ionic co-monomers include compounds of general formula (II)

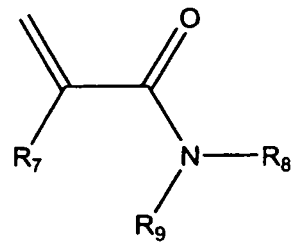

(II)

wherein

$R_7$ denotes hydrogen or methyl, and
$R_8$ and $R_9$ mutually independently denote hydrogen, alkyl or hydroxyalkyl with 1 to 5 C atoms.

Examples of compounds of general formula (II) include (meth)acrylamide, N-methyl (meth)acrylamide, N-isopropyl(meth)acrylamide or N,N-substituted (meth)acryl amides such as N,N-dimethyl(meth)acrylamide, N,N-diethyl (meth)acrylamide, N-methyl-N-ethyl(meth)acrylamide or N-hydroxyethyl(meth)acrylamide.

Further suitable non-ionic co-monomers include amphiphilic compounds of general formula (III)

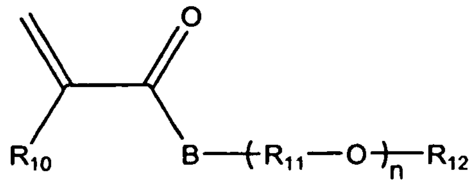

(III)

wherein

$R_{10}$ denotes hydrogen or methyl,
$R_{11}$ denotes alkylene with 2 to 6 carbon atoms,
$R_{12}$ denotes hydrogen, alkyl, aryl or aralkyl with 8 to 32 carbon atoms,
B denotes O or $NR_{13}$, with $R_{13}$ denoting alkyl with 1 to 4 carbon atoms, and
n denotes an integer from 1 to 50, preferably 1 to 20.

Examples of amphiphilic compounds of general formula (III) include reaction products of (meth)acrylic acid and polyethylene glycols (10 to 50 ethylene oxide units), which are etherified with a fatty alcohol, or the corresponding reaction products with (meth)acrylamide.

When co-using additional water-soluble dispersant components in combination with the polymeric coagulant, the weight ratio of the polymeric coagulant to said additional water-soluble dispersant components is preferably within the range of from 1:0.01 to 1:0.5, preferably 1:0.01 to 1:0.3. By way of example, cellulose derivatives, polyvinyl acetates, starch, starch derivatives, dextrans, polyvinylpyrrolidones, polyvinylpyridines, polyethyleneimines, polyamines, polyvinylimidazoles, polyvinylsuccinimides, polyvinyl-2-methylsuccinimides, polyvinyl-1,3-oxazolidin-2-ones, polyvinyl-2-methylimidazolines and/or the respective copolymers thereof with maleic acid, maleic anhydride, fumaric acid, itaconic acid, itaconic anhydride, (meth)acrylic acid, salts of (meth)acrylic acid and/or (meth)acrylamide compounds may be mentioned as additional water-soluble dispersant components.

The water-in-oil monomer dispersion according to the invention further comprises one or more radically polymerizable (alk)acrylic acid derivatives. In this regard, the term "(alk)acrylic" refers to acrylic and alkacrylic, e.g., encompasses acrylic and methacrylic. In a preferred embodiment, "(alk)acrylic" is "(meth)acrylic". The term "derivative" refers to reaction products of (alk)acrylic acid with other compounds that are capable of reacting with (alk)acrylic acid under suitable reaction conditions, possibly after activation, such as alkyl alcohols, alkyl thiols and alkyl amines. Said compounds that are capable of reacting with (alk)acrylic acid may bear further functional groups which as such are not

capable of reacting with (alk)acrylic acid under the given reaction conditions, such as aryl moieties, heteroaryl moieties, halogen residues, hydroxyl residues, carboxyl residues, tertiary amine residues, quaternized ammonium residues, and the like. Preferred radically polymerizable (alk)acrylic acid derivatives are cationic radically polymerizable (alk)acrylic acid esters, (alk)acrylic acid thioesters and (alk)acrylic acid amides.

Preferably, the radically polymerizable (alk)acrylic acid derivative is water-soluble, preferably cationic. Preferably, the content of the radically polymerizable (alk)acrylic acid derivative is within the range of from 0.1 to 30 wt.-%, more preferably 0.5 to 25 wt.-%, still more preferably 1.0 to 20 wt.-%, yet more preferably 2.5 to 17.5 wt.-%, most preferably 5.0 to 15 wt.-% and in particular 7.0 to 9.0 wt.-%, based on the total weight of the water-in-oil monomer dispersion.

In a preferred embodiment, the radically polymerizable (alk)acrylic acid derivative is derived from one or more cationic monomers selected from the group consisting of (alk)acrylamidoalkyltrialkyl ammonium halides and (alk)acryloyloxyalkyl trialkyl ammonium halides. Preferably, the aforementioned cationic monomers comprise 6 to 25 carbon atoms, more preferably 7 to 20 carbon atoms, most preferably 7 to 15 carbon atoms and in particular 8 to 12 carbon atoms.

Preferably, the radically polymerizable (alk)acrylic acid derivative is a monomer according to general formula (I) as defined supra. The radically polymerizable (alk)acrylic acid derivative according to general formula (I) may be an an amide (A = NH), e.g., dimethylaminopropyl acrylamide quaternized with methylchloride (DIMAPA quat). Preferably, however, the radically polymerizable (alk)acrylic acid derivative according to general formula (I) is an ester (A = O), particularly dimethylaminoethyl (meth)acrylate quaternized with methylchloride (ADAME quat.).

When the polymeric coagulant is also derived form an (alk)acrylic acid derivative, said (alk)acrylic acid derivative may be different from or identical with the radically polymerizable (alk)acrylic acid derivative contained in the water-in-oil monomer dispersion. Preferably, both monomers differ from one another so that the repetition units of the intercalated polymer differ from the repetition units of the polymeric coagulant. Thus, the polymeric coagulant and the intercalated polymer preferably differ from each other, said difference possibly involving physical variables such as different molecular weight and/or chemical structure, as well as different monomer composition.

Preferably, the water-in-oil monomer dispersion according to the invention further comprises one or more radically polymerizable, ethylenically unsaturated co-monomers. Under these provisions, the intercalated polymer yielded in step (b) of the process according to the invention is no homopolymer, but a copolymer or, e.g., a terpolymer. Preferably, the ethylenically unsaturated co-monomer is water-soluble, preferably non-ionic. Preferably, the content of the one or more ethylenically unsaturated co-monomers is within the range of from 1.0 to 90 wt.-%, more preferably 2.5 to 75 wt.-%, still more preferably 5 to 60 wt.-%, yet more preferably 10 to 50 wt.-%, most preferably 20 to 40 wt.-% and in particular 25 to 35 wt.-%, based on the total weight of the water-in-oil monomer dispersion.

Suitable ethylenically unsaturated co-monomers include compounds of general formula (II) and amphiphilic compounds of general formula (III), as defined supra.

Preferably, the one or more ethylenically unsaturated co-monomers comprise (alk)acrylamide, more preferably acrylamide.

In a preferred embodiment, when the water-in-oil monomer dispersion contains one or more ethylenically unsaturated co-monomers, the content of the radically polymerizable (alk)acrylic acid derivative is within the range of from 0.1 to 50 mol.-% , more preferably 1.0 to 40 mol.%, still more preferably 2.0 to 30 mol.-%, yet more preferably 3.0 to 20 mol.-%, most preferably 5.0 to 15 mol.-% and in particular 8.0 to 12 mol.-%, based on the total amount of the radically polymerizable (alk)acrylic acid derivative and the radically polymerizable, ethylenically unsaturated co-monomers.

In a preferred embodiment, the water-in-oil monomer dispersion contains a cationic radically polymerizable (alk)acrylic acid derivative and one or more non-ionic ethylenically unsaturated co-monomers. Preferably, the content of the cationic radically polymerizable (alk)acrylic acid derivative (cationicity) is within the range of from 0.1 to 75 wt.-% , more preferably 1.0 to 65 wt.-%, still more preferably 2.0 to 55 wt.-%, yet more preferably 5.0 to 45 wt.-%, most preferably 10 to 40 wt.-% and in particular 15 to 35 wt.-%, based on the total amount of the cationic radically polymerizable (alk)acrylic acid derivative and the non-ionic radically polymerizable, ethylenically unsaturated co-monomers.

Preferably, the radical reactivity ratios of the radically polymerizable (alk)acrylic acid derivative $r_1$ and of the radically polymerizable, ethylenically unsaturated co-monomer $r_2$ are each within the range of from 0.01 to 100, more preferably 0.02 to 50, still more preferably 0.05 to 20, most preferably 0.1 to 10 and in particular 0.2 to 5. In this context, $r_1$ is defined as the ratio of two propagation constants involving a radical of the (alk)acrylic acid derivative: The ratio always compares the propagation constant for the monomer of the same type adding to the radical ($k_{11}$) relative to the propagation constant for the addition of the co-monomer ($k_{12}$), i.e., $r_1 = k_{11}/k_{12}$. In analogy, $r_2 = k_{22}/k_{21}$. For further details it can be referred e.g. to Paul C. Hiemenz, Polymer Chemistry, Marcel Dekker New York, 1984, Chapter 7.2.

In a particularly preferred embodiment of the water-in-oil monomer dispersion according to the invention,

- the oily substance is an aliphatic hydrocarbon containing 6 to 30 carbon atoms;
- the polymeric coagulant is derived from one or more monomers comprising an (alk)acrylamidoalkyltrialkyl ammonium

halide;

- the radically polymerizable (alk)acrylic acid derivative is an (alk)acryloyloxyalkyl trialkyl ammonium halide; and/or
- the radically polymerizable, ethylenically unsaturated co-monomers comprise an (alk)acrylamide.

In step (a) of the process according to the invention a water-in-oil monomer dispersion is prepared which comprises water, an oily substance, a water-in-oil emulsifier, a polymeric coagulant, a radically polymerizable (alk)acrylic acid derivative, and optionally one or more radically polymerizable, ethylenically unsaturated co-monomers; wherein the polymeric coagulant is derived from at least one cationic monomer selected from the group consisting of (alk)acrylamidoalkyl-trialkyl ammonium halides, (alk)acryloyloxyalkyl trialkyl ammonium halides, and alkenyl trialkyl ammonium halides.

The preparation of water-in-oil monomer dispersions is known to the skilled person. The components may be added simultaneously or consecutively. Preferably, the aqueous phase and the oil phase are prepared separately from one another and afterwards, are combined in order to yield the water-in-oil monomer dispersion.

The components may be added by conventional means, e.g. by pouring or dropping liquids, by dosing powders, and the like.

Preferably, the aqueous phase comprises a homogeneous solution of water, the polymeric coagulant, the radically polymerizable (alk)acrylic acid derivative, and the radically polymerizable, ethylenically unsaturated co-monomers, if any. Prior to combining the aqueous phase and the oil phase, further components may be added to the aqueous phase, such as chelating agents, buffers (acids and/or bases), branching agents, cross-linkers, chain transfer agents, and the like.

Suitable branching agents, cross-linkers and chain transfer agents are known to the skilled person. Preferably, however, no branching agents, cross-linkers or chain transfer agents are added.

Preferably, the pH of the aqueous phase is adjusted to a value within the range of from 1.0 to 5.0, more preferably 1.5 to 4.5, still more preferably 2.0 to 4.0, and most preferably 2.5 to 3.5. The pH value may be adjusted by means of suitable acids and bases, respectively. Preferred acids are organic acids and mineral acids, such as formic acid, acetic acid, hydrochloric acid and sulfuric acid.

Preferably, the oil phase comprises a homogeneous solution of the oily substance and the water-in-oil emulsifier. Prior to combining the aqueous phase and the oil phase, further components may be added to the oil phase, such as further anionic, cationinc, zwitterionic or non-ionic surfactants or polymer emulsifiers, and the like.

Preferably, the aqueous phase is added to the oil phase under vigorous stirring which may be effected, e.g., by a high-speed mixer, homogenizer, and the like.

In principle, it is not necessary that the entire amount of each component is initially present when the water-in-oil monomer dispersion is prepared in step (a) of the process according to the invention. Alternatively, complete or partial dispersion of the monomers or monomer solution in the polymeric coagulant can be effected at the beginning of the polymerization, the remainder of the monomers or monomer solution being added as metered portions or as a continuous feed distributed over the entire course of polymerization. For example, only a certain portion of a particular component, e.g., only 70 wt.-% of the radically polymerizable (alk)acrylic acid derivative, may be initially employed in step (a), and thereafter, possibly in the course of step (b), the remainder of said particular component, e.g., the residual 30 wt.-% of the radically polymerizable (alk)acrylic acid derivative, is employed.

After the water-in-oil monomer dispersion has been prepared in step (a) of the process according to the invention, in step (b) the radically polymerizable (alk)acrylic acid derivative and the optionally present one or more radically polymerizable, ethylenically unsaturated co-monomers are radically polymerized thereby yielding the intercalated polymer.

Step (b) is preferably performed as an inverse emulsion polymerization, e.g., in a water-in-oil emulsion. In this inverse emulsion polymerization process, the resultant inverse polymer emulsion contains a dispersed aqueous phase containing the intercalated polymer, and a continuous oil phase formed of the inert oily substance.

The skilled person knows how to radically polymerize a water-in-oil monomer dispersion. Typically, the polymerization reaction according to step (b) is carried out in the presence of one ore more conventional polymerization initiators.

Radicals may be formed, e.g., upon thermally induced or photochemically induced homolysis of single bonds or redox reactions.

Examples of suitable water-soluble initiators include, e.g., 2,2'-azobis-(2,4-dimethylvaleronitrile), 2,2'-azobis-(2-amidinopropane) dihydrochloride, 4,4'-azobis-(4-cyanopentanoic acid), or redox systems such as ammonium persulfate/ferric sulfate. Oil-soluble initiators include, e.g., dibenzoyl peroxide, dilauryl peroxide or tert-butyl peroxide, or azo compounds such as 2,2'-azobisisobutyronitrile, dimethyl 2,2'-azobisisobutyrate and 2,2'-azobis-(4-methoxy-2,4-dimethylvaleronitrile). The initiators may be used either individually or in combinations and generally in an amount of about 0.005 to 0.5% by weight of the total weight of the water-in-oil monomer dispersion. The skilled person principally knows how to modify the amount and type of the initiator in order to modify the properties of the resultant polymer product, e.g., its average molecular weight.

Preferably, azo compounds such as 2,2'-azobisisobutyronitrile, 2,2'-azobis(2-aminopropane) dihydrochloride

or preferably potassium persulfate, ammonium persulfate, hydrogen peroxide, optionally in combination with a reducing agent, e.g. an amine or sodium sulfite, are used as radical initiators. The amount of initiator, relative to the monomers to be polymerized, generally ranges from $10^{-3}$ to 1.0 wt.%, preferably from $10^{-2}$ to 0.1 wt.%. The initiators can be added completely or also only in part at the beginning of the polymerization, with subsequent apportioning of the residual amount over the entire course of polymerization. In a preferred embodiment, the polymerization is initiated by means of an azo initiator and, after reaching the maximum temperature, continued with a redox initiator system to reduce the content of residual monomers.

In another advantageous embodiment, once the exothermic polymerization reaction is complete, i.e. generally after the temperature maximum, the content of residual monomers is further reduced by subsequent addition of redox initiator.

In another advantageous embodiment of the invention, both monomer and polymeric coagulant are apportioned into the polymerization reactor during polymerization. In general, a portion, e.g. 10 to 20% of the monomers and the polymeric coagulant, is initially introduced. Following initiation of polymerization, the above-mentioned apportioning is effected, optionally accompanied by further apportioning of polymerization initiator.

In addition, it is also possible to remove oil and/or water during and/or after polymerization and optionally to add further polymeric coagulant. As evaporation is rather energy consuming, however, the content of water and the oily substance in the water-in-oil monomer dispersion is preferably optimized so that only minor amounts, if any, are evaporated after polymerization.

The polymerization temperature generally is 0 to 120°C, preferably 30 to 90°C, more preferably 50 to 70°C. The polymerization temperature can be selected based on the decomposition kinetics of the initiator used. The polymerization is preferably carried out in such a way that the system is purged with an inert gas and polymerized under an inert gas atmosphere, e.g. under a nitrogen atmosphere. Polymerization conversion or the end of polymerization can easily be detected by determining the content of residual monomers. Methods for this purpose are familiar to those skilled in the art.

Polymerization times are the same as those conventionally used in the art, generally 0.5 to 3 hours and preferably 1 to 2.5 hours, although as little as one-half hour could be used. However, attempting more rapid polymerization over a shorter period of time creates problems with removing heat. In this regard it is greatly preferred that the polymerization medium be stirred well or otherwise agitated during the polymerization.

The equipment utilized for the polymerization can simply be standard reactors such as are used for oil-in-water or water-in-oil emulsion polymerizations.

Following polymerization, it can be advantageous to cool down the reaction mixture before optionally adding further additives, such as salts or acids, to the dispersion, preferably with stirring.

To reduce the residual monomer content, it is also possible to increase the temperature during the course of the polymerization. Alternatively, it is also possible to use additional initiators during and at the end of the polymerization and/or residual monomer destructors.

Residual monomer destructors within the meaning of the invention are substances that modify polymerizable monomers by means of a chemical reaction in such a way that they are no longer polymerizable, such that within the meaning of the invention they are no longer monomers. Substances that react with the double bond present in the monomers and/or substances that can initiate a more extensive polymerization can be used for this purpose. As residual monomer destructors that react with the double bond, reducing agents can for example be used, preferably substances from the group of acids and neutral salts of acids derived from sulphur having an oxidation number lower than VI, preferably sodium dithionite, sodium thiosulphate, sodium sulphite or sodium disulphite, and/or substances having a hydrogen sulphide group, preferably sodium hydrogen sulphide or compounds from the group of thiols, preferably mercaptoethanol, dodecyl mercaptan, thiopropionic acid or salts of thiopropionic acid or thiopropanesulphonic acid or salts of thiopropanesulphonic acid, and/or substances from the group of amines, preferably from the group of amines with low volatility, preferably diisopropanolamine or aminoethyl ethanolamine, and/or substances from the group comprising Bunte salts, formamidine sulphinic acid, sulphur dioxide, aqueous and organic solutions of sulphur dioxide, hydroxylammonium sulphate, or thio urea.

Preferably, the water-in-oil polymer dispersion has a residual content of radically polymerizable (alk)acrylic acid derivative of at most 5,000 ppm, more preferably at most 2,500 ppm, still more preferably at most 1,000 ppm, yet more preferably at most 800 ppm, most preferably at most 600 ppm an in particular at most 400 ppm. In a preferred embodiment, the water-in-oil polymer dispersion has a residual content of radically polymerizable (alk)acrylic acid derivative of at most 200 ppm, more preferably at most 100 ppm, still more preferably at most 75 ppm, yet more preferably at most 50 ppm, most preferably at most 30 ppm an in particular at most 20 ppm.

Preferably, the water-in-oil polymer dispersion has a residual content of radically polymerizable, ethylenically unsaturated co-monomers of at most 5,000 ppm, more preferably at most 2,500 ppm, still more preferably at most 1,000 ppm, yet more preferably at most 800 ppm, most preferably at most 600 ppm an in particular at most 400 ppm.

Step (b) of the process according to the invention transforms the water-in-oil monomer dispersion into a water-in-oil polymer dispersion.

After and/or during the polymerization reaction in step (b), the resultant water-in-oil polymer dispersion may be distillated in order to reduce the content of the solvent.

In a preferred embodiment, the process according to the invention comprises the steps of

(a) preparing a water-in-oil monomer dispersion containing

- water,
- an oily substance,
- a water-in-oil emulsifier,
- a polymeric coagulant having a weight average molecular weight $M_w$ of from 75,000 to 350,000 g/mol and being synthesized from
    - o 30 to 100 wt.% of (alk)acrylamidoalkyltrialkyl ammonium halides, (alk)acryl-oyloxyalkyl trialkyl ammonium halides, and/or alkenyl trialkyl ammonium halides, and
    - o 0 to 70 wt.% of nonionic ethylenically unsaturated co-monomers, and
- a monomer mixture of
    - o 1 to 99 wt.-%, preferably 1 to 60 wt.% of (alk)acrylamidoalkyltrialkyl ammonium halides, (alk)acryloyloxyalkyl trialkyl ammonium halides, alkenyl trialkyl ammonium halides and/or dialkenyl dialkyl ammonium halides, and
    - o 1 to 99 wt.-%, preferably 40 to 99 wt.% of nonionic ethylenically unsaturated co-monomers; and

(b) adding a radical initiator, thereby performing a radical polymerization of the monomer mixture.

A further aspect of the invention relates to a water-in-oil polymer dispersion comprising water, an oily substance, an emulsifier, a polymeric coagulant, and an intercalated polymer, the dispersion being obtainable by the process described above.

The water-in-oil polymer dispersions according to the invention may be water-in-oil polymer suspensions or water-in-oil polymer emulsions or mixtures thereof.

Preferably, the preferred embodiments concerning the oily substance, water, polymeric coagulant, water-in-oil emulsifier and/or of the further constituents of the water-in-oil monomer dispersion (content, relative ratio, chemical nature, etc.) also apply to the water-in-oil polymer dispersion according to the invention.

The water-in-oil polymer dispersions according to the invention are, as a rule, self-inverting, i.e. a phase inversion occurs when the emulsion is poured into water and the polymers present in the dispersion dissolves in water. The phase inversion can, however, be accelerated by adding wetting agents (= inverters). These wetting agents can be added to the water-in-oil polymer dispersion or can be added to the water into which the dispersion is introduced.

Preferably, the wetting agent has a HLB (hydrophilic-lipophilic balance) value within the range of from 7 to 16, more preferably 8 to 15, still more preferably 9 to 14, most preferably 9.5 to 13.5 and in particular 10 to 13. Preferably, the content of the wetting agent is within the range of from 0.005 to 25 wt.-%, more preferably 0.01 to 10 wt.-%, still more preferably 0.1 to 7.5 wt.-%, yet more preferably 0.5 to 5.0 wt.-%, most preferably 1.0 to 4.0 wt.-% and in particular 1.5 to 3.5 wt.-%, based on the total weight of the water-in-oil polymer dispersion.

Preferably used wetting agents for inverting the water-in-oil polymer dispersion are ethoxylated alkylphenols having a degree of ethoxylation between 5 to 20 or ethoxylate fatty alcohols of 10 to 22 carbons, having a degree of ethoxylation between 5 and 20. The water-in-oil polymer dispersions may contain up to 10% by weight, based on the total dispersion, of the wetting agent having an HLB value of more than 9, preferably at least 10. Examples of suitable wetting agents having an HLB value greater than 10 are ethoxylared alkylphenols, dialkyl esters of sodium sulfosuccinates in which the alkyl group is of not less than 3 carbon atoms, soaps which are derived from fatty acids of 10 to 22 carbon atoms, and alkali metal salts of alkyl- or alkenylsulfates of 10 to 26 carbon atoms. Ethoxylated fatty alcohols and ethoxylated amines are also suitable. If the wetting agents are used in the polymerization itself, particularly finely divided water-in-oil polymer dispersions may be obtained.

In a particularly preferred embodiment, the chemical nature of the second emulsifier that may be present in the water-in-oil monomer dispersion during polymerization is identical to the wetting agent that is added to the water-in-oil polymer dispersion after the polymerization.

Preferably, the water-in-oil polymer dispersion according to the invention has a water content within the range of from 5.0 to 45 wt.-%, more preferably 10 to 40 wt.-%, still more preferably 15 to 35 wt.-%, yet more preferably 20 to 30 wt.-%, most preferably 22 to 29 wt.-% and in particular 24 to 28 wt.-%.

In a particularly preferred embodiment, the water content of the water-in-oil polymer dispersions according to the invention is close to the limit at which the water-in-oil polymer dispersion is inverted into an oil-in-water polymer dispersion. Preferably, self-inversion takes place when at least 100 wt.-%, more preferably at least 75 wt.-%, still more preferably at least 50 wt.-%, yet more preferably at least 30 wt.-%, most preferably at least 20 wt.-% and in particular at least 10 wt.-% of water are added, based on the total weight of the water-in-oil polymer dispersion.

In a preferred embodiment of the water-in-oil polymer dispersion according to the invention the weight average molecular weight $M_w$ of the intercalated polymer is higher than the weight average molecular weight $M_w$ of the polymeric coagulant. The skilled person knows how to measure and to influence the weight average molecular weight of the intercalated polymer, e.g. by modifying the initiator concentration, the addition of chain-transfer agents, and the like. Preferably, the weight average molecular weight is determined by gelpermeation chromatography (GPC), preferably using 1.5% formic acid as eluent versus pullulan standards, or rheological measurements.

Preferably, the intercalated polymer exhibits a degree of polymerization of at least 90%, more preferably at least 95%, still more preferably at least 98%, yet more preferably at least 99%, most preferably at least 99.5% and in particular at least 99.9%.

Preferably, the weight average molecular weight of the intercalated polymer is at least 1,000,000 g $mol^{-1}$, more preferably at least 1,250,000 g $mol^{-1}$, still more preferably at least 1,500,000 g $mol^{-1}$, yet more preferably at least 1,750,000 g $mol^{-1}$, most preferably at least 2,000,000 g $mol^{-1}$ and in particular at least 2,500,000 g $mol^{-1}$.

Preferably, the weight average molecular weight of the intercalated polymer is higher than the weight average molecular weight of a polymer that is obtained under exactly the same conditions but in the absence of any oily substance (solution polymerization in contrast to inverse emulsion polymerization).

Preferably, the molecular weight dispersity $M_w/M_n$ of the intercalated polymer is within the range of from 1.0 to 4.0, more preferably 1.5 to 3.5 and in particular 1.8 to 3.2.

Preferably, the content of the intercalated polymer is within the range of from 1.0 to 90 wt.-%, more preferably 5.0 to 80 wt.%, still more preferably 15 to 65 wt.-%, yet more preferably 25 to 60 wt.-%, most preferably 30 to 55 wt.-% and in particular 35 to 50 wt.-%, based on the total weight of the water-in-oil polymer dispersion.

Preferably, the relative weight ratio of the intercalated polymer to the polymeric coagulant is within the range of from 50:1 to 0.1:1, more preferably 30:1 to 0.5:1, still more preferably 20:1 to 1:1, yet more preferably 10:1 to 2:1, most preferably 8:1 to 5:1 and in particular 7:1 to 6:1.

Preferably, the weight average molecular weight $M_w$ of the polymer mixture present in the water-in-oil polymer dispersion, comprising the intercalated polymer and the polymeric coagulant, is in a range above 1.5 $10^6$ g/mol, as measured according to the GPC method.

Preferably, the intercalated polymer is water-soluble or water-swellable.

Preferably, the water-in-oil polymer dispersion according to the invention has

- a solution viscosity (according to Brookfield) within the range of from 3,000 to 20,000 mPas, more preferably 4,000 to 18,000 mPas, still more preferably 5,000 to 16,000 mPas, most preferably 6,000 to 14,000 mPas and in particular 7,000 to 9,000 mPas, in 1 wt.-% aqueous dispersion; and/or

- a salt viscosity of at least 750 mPas, more preferably at least 1,000 mPas, still more preferably at least 1,250 mPas, most preferably at least 1,500 mPas and in particular at least 1,750 mPas.

Preferred embodiments A to D of the water-in-oil polymer dispersion according to the invention are summarized in the table here below:

| component | A | B | C | D |
|---|---|---|---|---|
| oily substance | hydrophobic liquid | hydrocarbon | aliphatic hydrocarbon | $C_{10}$-$C_{22}$ aliphatic hydrocarbon |
| water-in-oil emulsifier | HLB 2-9 | non-ionic surfactant, HLB 2-9 | non-ionic surfactant, HLB 3-8 | sorbitan fatty acid ester |
| polymeric coagulant derived from | cationic water-soluble monomer | monomer according to formula (I) | (alk)acrylamidoalkyl trialkyl ammonium halide | DIMAPA quat. |
| intercalated polymer derived from a) + b): | | | | |

(continued)

| component | A | B | C | D |
|---|---|---|---|---|
| a) (alk)acrylic acid derivative | cationic water-soluble monomer | monomer according to formula (I) | (alk)acryloyloxyalkyl trialkyl ammonium halide | ADAME quat. |
| b) ethylenically unsaturated co-monomer | non-ionic water-soluble ethylenically unsaturated co-monomer | compound of general formula (II) | (alk)acrylamide | acrylamide |

Preferred variants 1 to 6 of the embodiments A to D are summarized in the table here below:

| component [wt.-%] | 1 | 2 | 3 | 4 | 5 | 6 |
|---|---|---|---|---|---|---|
| water | 5-45 | 10-40 | 15-35 | 20-30 | 22-29 | 24-28 |
| oily substance(s) | 0.1-60 | 1.0-55 | 2.5-50 | 5.0-45 | 10-40 | 15-35 |
| water-in-oil emulsifier(s), HLB 2-9 | 0.01-25 | 0.1-10 | 0.5-5.0 | 1.0-4.0 | 1.5-3.5 | 1.8-3.0 |
| polymeric coagulant(s) | 0.01-30 | 0.1-20 | 0.5-15 | 1.0-10 | 3.0-8.0 | 4.5-6.5 |
| intercalated polymer derived from | | | | | | |
| (alk)acrylic acid derivative(s) | 0.1-30 | 0.5-25 | 1.0-20 | 2.5-17.5 | 5.0-15 | 7.5-12.5 |
| ethylenically unsaturated co-monomer(s) | 1.0-90 | 2.5-75 | 5-60 | 10-50 | 20-40 | 25-35 |

In the above table, all percentages are based on the total weight of the water-in-oil polymer dispersion.

Preferred components of the water-in-oil polymer dispersion and their respective content result from the following combinations of embodiments A to D with variants 1 to 6: $A^1$, $A^2$, $A^3$, $A^4$, $A^5$, $A^6$, $B^1$, $B^2$, $B^3$, $B^4$, $B^5$, $B^6$, $C^1$, $C^2$, $C^3$, $C^4$, $C^5$, $C^6$, $D^1$, $D^2$, $D^3$, $D^4$, $D^5$, and $D^6$. For example, "$C^4$" means a combination of embodiment C with variant 4, i.e., a water-in-oil polymer dispersion containing 25-75 wt.-% water, 5.0-45 wt.-% of at least one aliphatic hydrocarbon, 3.0-9.0 wt.-% of at least one non-ionic surfactant having a HLB value of 3-8, 6.0-13 wt.-% of at least one polymeric coagulant derived from (alk)acrylamidoalkyl trialkyl ammonium halide, and at least one intercalated polymer derived from a) 2.5-17.5 wt.-% of at least one (alk)acryloyloxyalkyl trialkyl ammonium halide and from b) 10-50 wt.-% of at least one (alk)acrylamide, wherein all percentages are based on the total weight of the water-in-oil polymer dispersion.

Preferably, the water-in-oil polymer dispersions according to the invention are liquid. In comparison to powders, liquid dispersions are easier to dose. Powders usually require expensive dosing equipment.

Preferably, the overall polymer content of the water-in-oil polymer dispersions according to the invention is at least 20 wt.%, more preferably at least 30 wt.-%, still more preferably at least 35 wt.-%, yet more preferably at least 40 wt.-%, most preferably within the range of from 40 wt.-% to 65 wt.-% and in particular from 45 wt.-% to 50 wt.-%, based on the total weight of the water-in-oil polymer dispersions.

In a particularly preferred embodiment of the water-in-oil polymer dispersion according to the invention, the relative weight ratio of the overall content of polymer to the overall content of oily substance is within the range of from 10:1 to 0.1:1, more preferably 8:1 to 0.5:1, still more preferably 6:1 to 0.75:1, yet more preferably 4:1 to 1:1, most preferably 3:1 to 1:1 and in particular 2.5:1 to 1.5:1.

Optionally, the water-in-oil polymer dispersions according to the invention may contain further conventional components, e.g. in the form of water-soluble or oil-soluble acids and/or salts. The acid is preferably present in amounts of 0.1 to 3 wt.% and the salt in amounts of 0.1 to 3 wt.%, each relative to the overall dispersion, and acid and salt taken together are preferably present in amounts of 5 wt.% at most, preferably 4 wt.% at most, relative to the total weight of the dispersion.

Said further conventional components can be added before, during or after polymerization.

Water-soluble organic acids and/or inorganic acids can be present. More specifically, suitable organic water-soluble acids are organic carboxylic acids, sulfonic acids, phosphonic acids, preferably aliphatic or aromatic mono-, di-, polycarboxylic acids and/or hydroxycarboxylic acids, preferably acetic acid, propionic acid, citric acid, oxalic acid, succinic acid, malonic acid, adipic acid, fumaric acid, maleic acid, benzoic acid, especially preferably citric acid, adipic acid and/or benzoic acid. Suitable inorganic acids are water-soluble mineral acids, preferably hydrochloric acid, sulfuric acid, nitric

acid and/or phosphoric acid. Very particularly preferred are citric acid, adipic acid, benzoic acid, hydrochloric acid, sulfuric acid and/or phosphoric acid.

Ammonium, alkali metal and/or alkaline earth metal salts, preferably ammonium, sodium, potassium, calcium and/or magnesium salts, can be used as water-soluble salts. Such salts can be salts of an inorganic acid or of an organic acid, preferably of an organic carboxylic acid, sulfonic acid, phosphonic acid, or of a mineral acid. The water-soluble salts are preferably salts of an aliphatic or aromatic mono-, di-, polycarboxylic acid, of a hydroxycarboxylic acid, preferably of acetic acid, propionic acid, citric acid, oxalic acid, succinic acid, malonic acid, adipic acid, fumaric acid, maleic acid or benzoic acid, or sulfuric acid, hydrochloric acid or phosphoric acid. Very particularly preferably, sodium chloride, ammonium sulfate and/or sodium sulfate are used as water-soluble salts. Preferably, however, no further salt is added.

The salts can be added before, during or after polymerization, polymerization preferably being carried out in the presence of a water-soluble salt.

Furthermore, the water-in-oil polymer dispersions according to the invention may contain water-soluble polyfunctional alcohols and/or reaction products thereof with fatty amines in amounts of up to 30 wt.%, preferably up to 15 wt.%, and more preferably up to 10 wt.%, relative to the polymeric coagulant. More specifically suitable in this context are polyalkylene glycols, preferably polyethylene glycols, polypropylene glycols, block copolymers of propylene/ethylene oxides, with molecular weights of 50 to 50,000, preferably 1,500 to 30,000, low-molecular weight polyfunctional alcohols such as glycerol, ethylene glycol, propylene glycol, pentaerythritol and/or sorbitol as polyfunctional water-soluble alcohols and/or the reaction products thereof with fatty amines having $C_6$-$C_{22}$ in the alkyl or alkylene residues.

Said water-soluble polyfunctional alcohols and/or reaction products thereof with fatty amines can be added before, during or after polymerization.

Preferably, the water-in-oil polymer dispersions according to the invention show a retention effect according to the standard test method of Technical Association of Pulp and Paper Industry (TAPPI), namely T261 pm-79 method (that is, Britt Jar-method), of at least 35% or at least 37.5%, more preferably at least 40% or at least 42.5%, still more preferably at least 45% or at least 47.5%, yet more preferably at least 50% or at least 52.5%, most preferably at least 55% or at least 57.5% and in particular at least 60% or at least 62.5%. In a preferred embodiment, test conditions are modified as in Application Example A-3.

The water-in-oil polymer dispersions according to the invention have several advantages over conventional water-in-water polymer dispersions, e.g.:

- intercalated polymers having a higher molecular weight may be obtained resulting *inter alia* in improved rheological properties of the water-in-oil polymer dispersions;
- the molar ratio of ionic monomers to non-ionic monomers in the polymeric coagulant and/or in the intercalated polymer may be varied within broad limits without significantly deteriorating the essential properties of the water-in-oil polymer dispersions;
- the chemistry of the polymeric coagulant is substantially independent from the chemistry of the intercalated polymer; and
- branching agents, cross-linkers and other polymerization auxiliaries may be incorporated without complicating the polymerization process.

The water-in-oil polymer dispersions according to the invention are useful as additives in solid/liquid separation processes, e.g., retention in paper or sludge dewatering in sewage plants. They show improved application performance, especially regarding ash retention in paper retention and dewatering. The water-in-oil polymer dispersions obtainable according to the invention have the unexpected advantage of being excellent auxiliaries in paper making, particularly useful as retention and dewatering agents in paper making.

A further aspect of the invention relates to the use of the water-in-oil polymer dispersion according to the invention as flocculant (flocculating agent), preferably in the manufacture of paper, preferably as retention aid and/or drainage aid.

A further aspect of the invention relates to a process for the manufacture of paper, paperboard or cardboard, the process comprising the step of (ii) adding the water-in-oil polymer dispersion according to the invention to an aqueous cellulosic suspension. Preferably, the process further comprises the step of (i) adding a further polymeric coagulant to the cellulosic suspension, wherein step (i) is preferably performed prior to step (ii).

Preferably, the process for the manufacture of paper comprises forming a cellulosic suspension, flocculating the suspension, optionally mechanically shearing the suspension and optionally reflocculating the suspension, draining the suspension on a screen to form a sheet and then drying the sheet, wherein the suspension is flocculated and/or reflocculated by introducing the water-in-oil polymer dispersion according to the invention.

It has surprisingly been found that the water-in-oil polymer dispersions according to the invention provide improved performance in terms of improved retention and yet still maintain good drainage and formation performance. The water-in-oil polymer dispersions flocculate the cellulosic fibres and other components of the cellulosic paper making stock more efficiently thus inducing improvements in retention.

In the process for the manufacture of paper according to the invention the water-in-oil polymer dispersion may be added to the paper making stock as the sole treatment agent in the paper making process, although preferably the water-in-oil polymer dispersion may be added as part of a multi-component flocculant system in which the cellulosic suspension is flocculated and then reflocculated.

In one aspect of the invention the cellulosic suspension is flocculated by the water-in-oil polymer dispersion (flocculating agent) and then the cellulosic suspension is reflocculated by a further addition of the water-in-oil polymer dispersion (reflocculating agent) or alternatively, by another flocculating material (reflocculating agent). Optionally, the flocs formed are degraded before being reflocculated, by for instance applying mechanical shear. This can be for instance passing the flocculated cellulosic suspension through one or more shear stages such as a centri-screen or a fan pump etc.

In an alternative form of the invention the cellulosic suspension is flocculated by introducing a flocculating material (flocculating agent) and the cellulosic suspension is reflocculated by introducing the water-in-oil polymer dispersion (reflocculating agent). Optionally the flocs are degraded before reflocculation.

The cellulosic suspension may be flocculated by introducing the flocculating agent into the suspension at any suitable addition point. This may be for instance before one of the pumping stages or prior to the centri-screen or even after the centri-screen. The cellulosic suspension may then be reflocculated at any suitable point after it has been flocculated. The flocculating agent and reflocculating agent may be added in close proximity, for example without any shear stage between the additions. Preferably, there is at least one shear stage (selected from cleaning, pumping and mixing stages) separating the addition of flocculating agent and reflocculating agent. Desirably, when the flocculating agent is applied prior to a shear stage, for instance a fan pump or the centri-screen, the reflocculating agent may be added after that shear stage. This may be immediately after the shear stage or more usually further after. Thus, the flocculating agent may be added prior to a fan pump and the reflocculating agent may be added after the centri-screen.

Accordingly, the water-in-oil polymer dispersion is added as the flocculating agent and/or as the reflocculating agent.

Desirably, the water-in-oil polymer dispersion may be added to the stock at a dose of 5 to 5,000 ppm, more preferably 50 to 2,500 ppm, most preferably 200 to 1,000 ppm, based on solid contents.

When the water-in-oil polymer dispersion is used in a paper making process as part of a multi-component flocculating system, it may be added as the flocculating agent and/or reflocculating agent. According to one preferred aspect of the invention the multi-component flocculating system comprises the water-in-oil polymer dispersion and a different flocculating material. This flocculating material may be any of the group consisting of water soluble polymers, water insoluble polymeric microbeads, particulate uncooked polysaccharides and inorganic materials. Suitable flocculating materials include inorganic materials such as siliceous materials, alum, aluminium chloro hydrate and polyaluminium chloride.

When the flocculating material is a water soluble polymer, it may be any suitable water soluble polymer, for instance biopolymers, such as nonionic, cationic, anionic and amphoteric starches or other polysaccharides. The flocculating material may also be any suitable cationic, anionic, amphoteric or nonionic synthetic water soluble polymer.

The flocculating material may be a siliceous material which is in the form of an anionic microparticulate composition. The siliceous materials include silica based particles, colloidal silica, silica microgels, silica sols, silica gels, polysilicates, aluminosilicates, borosilicates, polyaluminosilicates, polyborosilicates, zeolites and clays. The clays are preferably swelling clays, for instance this may be typically a bentonite type clay. The preferred clays are swellable in water and include clays which are naturally water swellable or clays which can be modified, for instance by ion exchange to render them water swellable. Suitable water swellable clays include but are not limited to clays often referred to as hectorite, smectites, montmorillonites, nontronites, saponite, sauconite, hormites,attapulgites and sepiolites.

Alternatively, the flocculating material is a colloidal silica, selected from polysilicates and polyaluminosilicates. This includes polyparticulate polysilicic microgels of surface area in excess of 1,000 $m^2/g$, for instance water soluble polyparticulate polyalumino silicate microgels or aluminate polysilicic acid. In addition the flocculating material may be a colloidal silicic acid.

The flocculating material may also be a colloidal borosilicate. The colloidal borosilicate may be prepared by contacting a dilute aqueous solution of an alkali metal silicate with a cation exchange resin to produce a silicic acid and then forming a heel by mixing together a dilute aqueous solution of an alkali metal borate with an alkali metal hydroxide to form an aqueous solution containing 0.01 to 30% $B_2O_3$, having a pH of from 7 to 10.5.

The cellulosic stock suspension may comprise a filler. The filler may be any of the traditionally used filler materials. For instance, the filler may be clay such as kaolin, or the filler may be a calcium carbonate which could be ground calcium carbonate or in particular precipitated calcium carbonate, or it may be preferred to use titanium dioxide as the filler material. Examples of other filler materials also include synthetic polymeric filles. The paper making stock

may comprise any suitable amount of filler. Generally, the cellulosic suspension comprises at least 5% by weight filler material. Typically the amount of filler will be up to 40% or higher, preferably between 10% and 40% filler.

The flocculating material used in conjunction with the water-in-oil polymer dispersion, may be an anionic, nonionic, cationic or amphoteric branched water soluble polymer that has been formed from water soluble ethylenically unsaturated monomer or monomer blend. For instance the branched water soluble polymer may exhibit a) an intrinsic viscosity above 1.5 dl/g and/or saline Brookfield viscosity of above about 2.0 mPa. s.

Alternatively, the flocculating material used in conjunction with the water-in-oil polymer dispersion includes cross-linked anionic or amphoteric polymeric microparticles.

A particularly preferred process employs a multi-component flocculation system comprising as a flocculating agent the water-in-oil polymer dispersion and then as a reflocculating agent an anionic flocculating material. The anionic flocculating material includes siliceous materials such as microparticulate silicas, polysilicates, anionic polymeric microbeads and water soluble anionic polymers, including both linear and branched water soluble polymers.

Preferably, the process for the manufacture of paper according to the invention is for the manufacture of paper having an area weight of at least 15 $g/m^2$, more preferably at least 20 $g/m^2$, still more preferably at least 25 $g/m^2$, yet more preferably at least 30 $g/m^2$, most preferably at least 35 $g/m^2$ and in particular at least 40 $g/m^2$.

In a particularly preferred embodiment of the process for the manufacture of paper, a further polymeric coagulant is added to the cellulosic suspension, preferably before the water-in-oil polymer dispersion is introduced, i.e. the feed point of said further polymeric coagulant is preferably located "upstream" on the paper machine with respect to the feed point of the water-in-oil polymer dispersion. The feed point of the further polymeric coagulant may be for instance before one of the pumping stages or prior to the centri-screen. The further polymeric coagulant and the water-in-oil polymer dispersion may be added in close proximity, for example without any shear stage between the additions.

Said further coagulant may be identical in structure and/or molecular weight distribution with the polymeric coagulant that is present in the water-in-oil polymer dispersion and in the presence of which the *in situ* polymerization reaction is performed. Preferably, however, said further polymeric coagulant differs from the polymeric coagulant that is present in the water-in-oil polymer dispersion. The preferred embodiments of the polymeric coagulant described above in connection with the water-in-oil polymer dispersion also apply to said further polymeric coagulant that is preferably additionally employed in the process for the manufacture of paper.

Preferably, the further polymeric coagulant is derived (synthesized) from

- 30 to 100 wt.% of (alk)acrylamidoalkyltrialkyl ammonium halides, (alk)acryloyl-oxyalkyl trialkyl ammonium halides, alkenyl trialkyl ammonium halides and/or dialkenyl dialkyl ammonium halides; and 0 to 70 wt.% of nonionic comonomers; or
- a copolymerizate of epichlorohydrin and dialkylamine.

It has been surprisingly found that when employing the water-in-oil polymer dispersion according to the invention as a flocculating agent in a dual flocculating system, excellent retention and drainage performance, respectively, can be combined with good formation. Usually, retention/drainage performance and formation performance antagonize one another, but surprisingly, the properties of the water-in-oil polymer dispersions according to the invention are advantageous in both regards. The water-in-oil polymer dispersions show a significantly improved ash retention, which is a well established measure for retention and drainage performance.

When comparing the water-in-oil polymer dispersions according to the invention with conventional water-in-oil polymer dispersions, which do not contain a polymeric coagulant, ash retention values are substantially better.

Further, when comparing the water-in-oil polymer dispersions according to the invention with conventional water-in-water polymer dispersions, which do not contain an oily substance, is substantially improved.

Surprisingly, an even further improvement of the retention and drainage efficiency of the water-in-oil polymer dispersion can be achieved by adding a further polymeric coagulant to the cellulosic suspension.

EXAMPLES

*Viscosity determination methods*

Solution viscosity - aqueous polymer composition 1 wt.-% polymer content:

The Brookfield viscosity is determined using an RVT-DV II Brookfield viscosimeter. The required amount to prepare 300 ml of a 1.0 wt.-% solution (based on the polymer content) is weighed on an analytical balance by means of a syringe. A beaker is filled with 300 ml demineralized water. Subsequently, the initially introduced water is stirred with a magnetic stirrer (40/7) at an intensity such that a cone is formed that reaches down to the bottom of the beaker (about 900 Upm). The polymer is now rapidly injected in this "stirring funnel". After one minute the magnetic stirrer is

removed and stirring is continued by means of a finger agitator for 30 min at 300±10 Upm. The temperature is adjusted to 20±1 °C the mixture is allowed to stand for 5 min. Subsequently, a spindle no. 3 is slowly dipped into the mixture and the viscosity is measured at 5 Upm, provided that the secant value is constant for 1 minute.

Salt viscosity:

An aqueous mixture is prepared containing 0.9 wt.-% polymer based on the active polymer content. 30 g of said aqueous mixture is diluted by adding a solution of 30 g sodium chloride in 270 ml of water. The overall mixture is stirred for 30 minutes. The temperature is adjusted to 20°C and the mixture is allowed to stand for 5 min. Subsequently, a spindle no. 1 is slowly dipped into the mixture and the viscosity is measured at 10 Upm, provided that the value is constant for 1 minute. Air bubbles at the spindle are strictly to be avoided.

EXAMPLES

Comparative Examples C-1, C-2 and C-3 (absence of polymeric coagulant):

*Comparative Example C-1:*

A water-in-oil-monomer dispersion was prepared from 15.744 kg water, 25.111 kg $C_{16}$-$C_{20}$ alkane, 3.348 kg of an emulsifier composition containing a sorbitan fatty acid ester and a fatty alcohol ethoxylate, 10.613 kg ADAME-quat. (80 wt.-%) (i.e. dimethylaminoethyl (meth)acrylate quatemized with methylchloride), and 59,929 kg acrylamide (50 wt.-%). The pH value was adjusted to 3 by adding sulfuric acid. Radical polymerization was initiated by adding an azo initiator.

*Comparative Example C-2:*

A water in-oil-monomer dispersion was prepared from 21.440 kg water, 25.890 kg $C_{16}$-$C_{20}$ alkane, 3.702 kg of an emulsifier composition containing a sorbitan fatty acid ester and a fatty alcohol ethoxylate, 12.750 kg ADAME-quat. (80 wt.-%) and 50.162 kg acrylamide (50 wt.-%). The pH value was adjusted to 3 by adding sulfuric acid. Radical polymerization was initiated by adding the same initiator system as in comparative example C-1.

*Comparative Example C-3:*

A water in-oil-monomer dispersion was prepared from 16.836 kg water, 22.474 kg $C_{16}$-$C_{20}$ alkane, 3.532 kg of an emulsifier composition containing a sorbitan fatty acid ester and a fatty alcohol ethoxylate, 20.811 kg ADAME-quat. (80 wt.-%) and 44.495 kg acrylamide (50 wt.-%). The pH value was adjusted to 3 by adding sulfuric acid. Radical polymerization was initiated by adding the same initiator system as in comparative examples C-1 and C-2.

| | C-1 | C-2 | C-3 |
|---|---|---|---|
| (alk)acrylic acid derivative | ADAME quat. | ADAME quat. | ADAME quat. |
| co-monomer | acrylamide | acrylamide | acrylamide |
| cationicity | 22 wt.-% | 29 wt.-% | 43 wt.-% |

Comparative Example C-4 (absence of oily substance/emulsifier):

A water-in-water-monomer dispersion was prepared from 31.953 kg water, 5.569 kg ADAME-quat. (80 wt.-%), 26.720 kg acrylamide (50 wt.-%) and 31.572 kg of polymeric coagulant PC-2. The pH value was adjusted to 5 by adding sulfuric acid. Radical polymerization was initiated by adding a radical initiator.

Comparative example C-5 (presence of polymeric coagulant derived from DADMAC):

A water in-oil-monomer dispersion was prepared from 296.7 g $C_{16}$-$C_{20}$ alkane, 58.2 g of an emulsifier composition containing a sorbitan fatty acid ester and a fatty alcohol ethoxylate, 125.4 g ADAME-quat. (80 wt.-%), 708.0 g acrylamide (50 wt.-%) and 170.2 g of polymeric coagulant PC-1. Radical polymerization was initiated by adding an initiator system.

Inventive Example 1-1 (presence of polymeric coagulant derived from DIMAPA quat.)

A water in-oil-monomer dispersion was prepared from 0.827 kg water, 24.067 kg $C_{16}$-$C_{2o}$ alkane, 5.856 kg of an emulsifier composition containing a sorbitan fatty acid ester and a fatty alcohol ethoxylate, 10.172 kg ADAME-quat. (80 wt.-%), 57.430 kg acrylamide (50 wt.-%) and 13.806 kg of polymeric coagulant PC-2. Radical polymerization was initiated by adding an initiator system.

| | C-5 | I-1 |
|---|---|---|
| (alk)acrylic acid derivative | ADAME quat. | ADAME quat. |
| co-monomer | acrylamide | acrylamide |
| cationicity (intercalated polymer) | 22 wt.-% | 22 wt.-% |
| polymeric coagulant | poly(DADMAC) | poly(DIMAPA quat.) |

The cationicity of the polymer polymerized from the water-in-oil monomer dispersions of comparative example C-1, comparative example C-5 and inventive example I-1 was identical (22 wt.-%).

The cationicity of the polymers polymerized from the water-in-oil monomer dispersions of comparative examples C-2 and C-3, however, was higher (29 wt.-% and 43 wt.-%, respectively). This difference should be taken into account when comparing the inventive examples with the comparative examples.

Besides the absence of the cationic polymeric coagulant in comparative example C-1 and the presence of the polymeric coagulants in comparative examples C-5 and inventive example I-1, respectively, there are further minor differences in the experimental conditions which, however, do not substantially alter the comparability of inventive example I-1 with comparative examples C-1 and C-5.

Polymeric coagulants PC-1 to PC-6:

| | PC-1 | PC-2 | PC-3 | PC-4 | PC-5 | PC-6 | PC-7 |
|---|---|---|---|---|---|---|---|
| derived from | DADMAC | DIMAPA quat. | DIMAPA quat. | DIMAPA quat. | DIMAPA quat. | epichlorohydrin dimethylamine | DIMAPA quat. (97 wt.-%), acrylamide (3 wt.-%) |
| polymer content [wt.-%] | 60 | 40 | 24.2 | 24.2 | 23.2 | 50.5 | 100 (dry) |
| $M_w$ [g $mol^{-1}$] | 1,500,000 | 180,000 | 60,000 | 200,000 | 1,2000,000 | 40,000 | n.d. |
| n.d. not determined | | | | | | | |

Application Examples A-1 to A3:

*Application Example 1:*

Using a DFS 03 apparatus from BTG Mütek, retention was determined by adding the water-in-oil polymer dispersions according to the invention to specific paper pulp suspensions.

To this end, the water-in-oil polymer dispersions according to the invention were adjusted to a concentration of 0.1 wt.% using deionised water. A paper pulp suspension (75 wt.-% TMP, 15 wt.-% cellulose, 10 wt.-% SM rejects, Norske Skog, Walsum) was diluted with tap water to about 1% tissue density in a Schopper-Riegler freeness tester. After measuring tissue density (1.22 wt.-%), the retention tests were performed at 3 different concentrations of the water-in-oil polymer dispersion according to the invention (400/800/1200 g/l). The pulp-water mixture was maintained at 800 $min^{-1}$ for 15 s, 1000 $min^{-1}$ for 10 s and 800 $min^{-1}$ for 10 s. The diluted polymer dispersion was apportioned after the first

10 s, and the retention filtrate was removed after another 15 s, passed through a Schwarzband grade filter and dried to constant weight at 105°C for 1 hour.

In order to determine ash retention, ashing was performed at 550°C for 2 h and the ash reweighed in absolutely dry condition:

$$\text{Retention}\,\% = \frac{\text{PD inflow} - \text{PD outflow}}{\text{PD inflow}} \times 100$$

$$\text{Ash retention}\,\% = \left(1 - \frac{\text{PD outflow} - \text{ash outflow}\,\%}{\text{PD inflow} \times \text{ash inflow}\,\%}\right) \times 100$$

PD inflow: pulp density of inflow (pulp suspension) in wt.%
PD outflow: pulp density of filtrate (backwater) in wt.%
Ash outflow: percent mineral combustion residue in wt.% of filtrate (backwater)
Ash inflow: percent mineral combustion residue in wt.% of inflow (pulp suspension)

The results are summarized in the table here below and displayed in Figure 1:

| | additive 1 after 0 s | | additive 2 after 20 s | | | |
|---|---|---|---|---|---|---|
| no | furtherpolymeric coaqulant | amount added [kg/t] | example | amount added [kg/t] | total retention [%] | ash retention [%] |
| | | | | | | |
| 0 | - | - | - | - | 70,7 | 26,7 |
| | | | | | | |
| 1 | - | - | C-1 | 800 | 74,1 | 37,8 |
| 2 | - | - | C-2 | 800 | 73,9 | 39,4 |
| 3 | - | - | C-3 | 800 | 74,7 | 42,4 |
| 4 | - | - | I-1 | 800 | 77,6 | 52,3 |
| | | | | | | |
| 5 | PC-3 | 500 | C-1 | 800 | 76,3 | 43,1 |
| 6 | PC-4 | 500 | C-1 | 800 | 74,8 | 41,7 |
| 7 | PC-5 | 500 | C-1 | 800 | 75,6 | 42,6 |
| 8 | PC-6 | 500 | C-1 | 800 | 74,8 | 41,1 |
| 9 | PC-7 | 500 | C-1 | 800 | 75,7 | 46,5 |
| | | | | | | |
| 10 | PC-3 | 500 | C-2 | 800 | 73,5 | 39,7 |
| 11 | PC-4 | 500 | C-2 | 800 | 75,1 | 42,1 |
| 12 | PC-5 | 500 | C-2 | 800 | 76,0 | 43,4 |
| 13 | PC-6 | 500 | C-2 | 800 | 74,9 | 40,2 |
| 14 | PC-7 | 500 | C-2 | 800 | 76,2 | 44,8 |
| | | | | | | |
| 15 | PC-3 | 500 | C-3 | 800 | 76,0 | 46,7 |
| 16 | PC-4 | 500 | C-3 | 800 | 77,3 | 51,0 |
| 17 | PC-5 | 500 | C-3 | 800 | 77,1 | 50,0 |

(continued)

| | additive 1 after 0 s | | additive 2 after 20 s | | | |
|---|---|---|---|---|---|---|
| no | further polymeric coaqulant | amount added [kg/t] | example | amount added [kg/t] | total retention [%] | ash retention [%] |
| 18 | PC-6 | 500 | C-3 | 800 | 75,4 | 44,3 |
| 19 | PC-7 | 500 | C-3 | 800 | 78,7 | 52,9 |
| | | | | | | |
| 20 | PC-3 | 500 | I-1 | 800 | 78,2 | 57,1 |
| 21 | PC-4 | 500 | I-1 | 800 | 84,4 | 68,0 |
| 22 | PC-5 | 500 | I-1 | 800 | 80,2 | 58,7 |
| 23 | PC-6 | 500 | I-1 | 800 | 83,7 | 65,9 |
| 24 | PC-7 | 500 | I-1 | 800 | 81,5 | 63,2 |

A comparison of measurement no. 4 with measurements nos. 1 to 3 shows that the water-in-oil polymer dispersions according to the invention (I-1) are superior over water-in-oil polymer dispersions according to the prior art having the same cationicity (22 wt.-%, C-1).

Therefore, the polymerization of the radically polymerizable (alk)acrylic acid derivative and the optionally present radically polymerizable ethylenically unsaturated co-monomers in the presence of the polymeric coagulant causes properties which may not be achieved by omitting the polymeric coagulant when polymerizing the monomers.

Further, a comparison of the sets of measurements nos. 5-9, 10-14, 15-19 and 20-24 with one another reveals that the further polymeric coagulant (additive 1) significantly improves the drainage performance of the water-in-oil polymer dispersions according to the invention (I-1), while the drainage performance of the prior art water-in-oil polymer dispersions at various cationicities is hardly improved (C-1 to C-3). Thus, there is a surprising synergistic effect when employing the further polymeric coagulant in combination with the water-in-oil polymer dispersions according to the invention.

*Application Example A-2:*

Using a DFS 03 apparatus from BTG Mütek, retention was determined in analogy to the experimental conditions of application example 1.

The experiments were performed on waste paper having a tissue density of 0.5 wt.-% (60% DIP (de-inked part) and 40% ground wood, zeta potential -15,4 mV at 0,402 μs).

Samples tested:

| | | |
|---|---|---|
| C-1 | 39% active | 7.520 mPa*s |
| C-5 | 37% active | 6.980 mPa*s |
| I-1 | 37% active | 8.540 mPa*s (viscosity measured in 1 wt.-% solution) |
| dosing: | | 200, 400 and 600 ppm at about 5 g (dry oven) |

The results are summarized in the table here below and displayed in Figures 2 to 4:

| | | | | | | ash retention | |
|---|---|---|---|---|---|---|---|
| No. | | example | conc. of active | retention | turbidity | at 550°C | at 900°C |
| 1 | blank 1 | | 0.195 % | 61.5% | 345 NTU | 11.9% | 15.3 % |
| 11 | blank 2 | | 0.199 % | 60.6% | 352 NTU | 14.5 % | 14.4 % |
| 15 | blank 3 | | 0.204% | 59.8% | 357 NTU | 9.7% | 13.1% |

(continued)

| | | | | | | ash retention | |
|---|---|---|---|---|---|---|---|
| No. | | example | conc. of active | retention | turbidity | at 550°C | at 900°C |
| | | | | | | | |
| 2 | 200 ppm | C-1 | 0.163% | 67.8% | 150 NTU | 35.8% | 36.5% |
| 5 | 200 ppm | C-5 | 0.163% | 167.9% | 1161 NTU | 34.6 % | 37.9% |
| 8 | 200 ppm | I-1 | 0.154% | 69.7% | 127 NTU | 40.4% | 43.2 % |
| | | | | | | | |
| 3 | 400 ppm | C-1 | 0.132 % | 73.9% | 132 NTU | 47.9% | 50.8% |
| 6 | 400 ppm | C-5 | 0.134 % | 73.6 % | 96 NTU | 48.3 % | 50.9 % |
| 9 | 400 ppm | I-1 | 0.122 % | 75.9 % | 75 NTU | 54.5 % | 56.7% |
| | | | | | | | |
| 4 | 600 ppm | C-1 | 0.109 % | 78.6% | 67 NTU | 59.5 % | 61.5 % |
| 7 | 600 ppm | C-5 | 0.107% | 78.9 % | 90 NTU | 61.5 % | 63.5 % |
| 10 | 600 ppm | I-1 | 0.090 % | 82.2 % | 51 NTU | 69.4 % | 70.8 % |
| | | | | | | | |
| 1 | tissue density | | 0.506 % | 5.065 g/L | | | |
| 2 | tissue density | | 0.507 % | 5.070 g/L | | | |

The experiments revealed that the water-in-oil polymer dispersion according to the invention (I-1) is superior over the comparative water-in-water polymer dispersions (C-1 and C-5).

*Application Example A-3:*

Dewatering measurements were performed by the modified Schopper-Riegler-method. Retention and ash retention were determined according to the Britt-Jar method. Laboratory sheets of paper were manufactured to determine formation.

The results are summarized in the table here below and displayed in Figures 5 and 6:

| 12 g/l, 31.8% ash | | retention Britt-Jar 1200 rpm, 0.5 l | | sheet formation Rapid-K6then | |
|---|---|---|---|---|---|
| ash at 900°C example | | total retention F=6000 [%] | ash retention F= 1908 [%] | area weight [g/m$^2$] | formation |
| | | 49.8 | 16.5 | 51.0 | 5.44 |
| | | | | | |
| 750 g/t | C-1 | 54.9 | 35.0 | 54.5 | 7.12 |
| 1000 g/t | C-1 | 60.4 | 46.5 | 56.7 | 7.86 |
| | | | | | |
| 550 g/t | I-1 | 58.5 | 42.2 | 55.5 | 6.23 |
| 750 g/t | I-1 | 62.4 | 48.5 | 58.6 | 6.60 |
| 1500 g/t | I-1 | 74.3 | 66.1 | 61.8 | 8.85 |

Retention, ash retention and formation may be improved by increasing the dosing of the water-in-oil polymer dispersion according to the prior art (C-1; Figure 5).

However, the same results at lower dosages and even better results may be achieved by the water-in-oil

polymer dispersion according to the invention (I-1; Figure 6).

*Application Example A-4:*

The retention and drainage performance of a water-in-oil-polymer dispersion according to the invention (I-1) was compared with the retention and drainage performance of a water-in-water polymer dispersion according to the prior art (C-4).

Cellulose (75% short fiber, 25% long fiber; freeness 31°SR) was conditioned to a working mixture comprising 65% cellulose and 35% chalk (GCC). The working mixture had a concentration of 3 g/l.

Schopper Riegler: A standard recovered paper having a composition of 80 g recovered paper, 7 g China clay and 1913 g tap water was homogenized at 3000 rpm for 15 minutes. Thereafter, a working suspension having a concentration of 3 g/l was prepared.

Retention was determined by means of a DFS 04 apparatus from BTG Mütek. 1000 ml working suspension were mixed with the polymer dispersion and sheared at 1000 rpm for 10 seconds. Thereafter, a volume of about 200 ml was drained at 600 rpm through a sieve (40 mesh/0.22). Total retention was calculated from the solids of the filtrate and ash retention was determined after incineration (550°C).

Drainage velocity was also measured by means of the DFS 04 apparatus. This system has the advantage that test profile, incubation time and stirring speed may be preset electronically thereby excluding error sources during the test.

As a second reference, this method also includes the measurement of the drainage velocity (retention time) according to Schopper-Riegler. Doses of 100, 200 and 300 ppm were employed with respect to 3 g/l working mixture. After dosing the polymer dispersion, the mixture was agitated thrice.

The results are summarized in the table here below:

The solutions that were subjected to the tests were provided at a concentration of 1% active substance.

| example | retention time [sec.] | | | total retention [%] | | ash retention [%] | |
|---|---|---|---|---|---|---|---|
| | 100 ppm | 200 ppm | 300 ppm | 400 ppm | 800 ppm | 400 ppm | 800 ppm |
| C-4 | 79.3 | 54.9 | 41.8 | 67.5 | 69.6 | 27.6 | 28.0 |
| I-1 | 45.2 | 25.2 | 17.6 | 74.9 | 79.5 | 40.0 | 53.7 |
| blank | 141.3 | | | 60.2 | | 11.0 | |

The experiments revealed that the water-in-oil polymer dispersion according to the invention (I-1) is superior over the comparative water-in-water polymer dispersion (C-4) in standard drainage of recovered paper as well as in retention performance.

## Claims

**1.** A process for the preparation of a water-in-oil polymer dispersion comprising the steps of

(a) preparing a water-in-oil monomer dispersion comprising water, an oily substance, a water-in-oil emulsifier, a polymeric coagulant, a radically polymerizable (alk)acrylic acid derivative, and optionally one or more radically polymerizable, ethylenically unsaturated co-monomers; and
(b) radically polymerizing the radically polymerizable (alk)acrylic acid derivative and the optionally present one or more radically polymerizable, ethylenically unsaturated co-monomers thereby yielding an intercalated polymer;

wherein the polymeric coagulant is derived from at least one cationic monomer selected from the group consisting of (alk)acrylamidoalkyltrialkyl ammonium halides, (alk)acryloyloxyalkyl trialkyl ammonium halides, and alkenyl trialkyl ammonium halides.

**2.** The process according to claim 1, wherein the oily substance is an aliphatic hydrocarbon.

**3.** The process according to claim 1 or 2, wherein the water-in-oil emulsifier has a HLB value within the range of from

2 to 9.

**4.** The process according to any of the preceding claims, wherein the radically polymerizable (alk)acrylic acid derivative is a cationic monomer selected from the group consisting of (alk)acrylamidoalkyltrialkyl ammonium halides, (alk) acryloyloxyalkyl trialkyl ammonium halides, alkenyl trialkyl ammonium halides and dialkenyl dialkyl ammonium halides.

**5.** The process according to any of the preceding claims, wherein the one or more ethylenically unsaturated comonomers comprise (alk)acrylamide.

**6.** The process according to any of the preceding claims, wherein the content of the radically polymerizable (alk)acrylic acid derivative is within the range of from 0.1 to 50 mol.%, based on the total amount of the radically polymerizable (alk)acrylic acid derivative and the radically polymerizable, ethylenically unsaturated co-monomers.

**7.** The process according to any of the preceding claims, wherein

- the oily substance is an aliphatic hydrocarbon containing 6 to 30 carbon atoms; and/or
- the polymeric coagulant is derived from one or more monomers comprising an (alk)acrylamidoalkyltrialkyl ammonium halide; and/or
- the radically polymerizable (alk)acrylic acid derivative is an (alk)acryloyloxyalkyl trialkyl ammonium halide; and/or
- the radically polymerizable, ethylenically unsaturated co-monomers comprise acrylamide.

**8.** A water-in-oil polymer dispersion comprising water, an oily substance, a water-in-oil emulsifier, a polymeric coagulant, and an intercalated polymer, the dispersion being obtainable by the process according to any of claims 1 to 7.

**9.** The water-in-oil polymer dispersion according to claim 8, wherein the weight average molecular weight $M_w$ of the intercalated polymer is higher than the weight average molecular weight $M_w$ of the polymeric coagulant.

**10.** The water-in-oil polymer dispersion according to claim 8 or 9, which has

- a solution viscosity within the range of from 3,000 to 20,000 mPas; and/or
- a salt viscosity of at least 750 mPas.

**11.** The water-in-oil polymer dispersion according to any of claims 8 to 10, which contains

- 10 to 90 wt.-% of water;
- 0.1 to 60 wt.-% of at least one oily substance;
- 0.1 to 25 wt.-% of at least one water-in-oil emulsifier;
- 0.1 to 30 wt.-% of at least one polymeric coagulant; and
- at least one intercalated polymer derived from
    - 0.1 to 30 wt.-% of at least one radically polymerizable (alk)acrylic acid derivative; and
    - 1.0 to 90 wt.-% of at least one radically polymerizable ethylenically unsaturated co-monomer,

all percentages being based on the total weight of the dispersion.

**12.** Use of the water-in-oil polymer dispersion according to any of claims 8 to 11 as flocculant.

**13.** A process for the manufacture of paper, paperboard or cardboard, the process comprising the step of adding the water-in-oil polymer dispersion according to any of claims 8 to 12 to an aqueous cellulosic suspension.

**14.** The process according to claim 13, wherein a further polymeric coagulant is added to the cellulosic suspension.

**Patentansprüche**

**1.** Verfahren zur Herstellung einer Wasser-in-Öl-Polymerdispersion, bei dem man

(a) eine Wasser-in-Öl-Monomerdispersion, die Wasser, eine ölige Substanz, einen Wasser-in-Öl-Emulgator, ein polymeres Koagulans, ein radikalisch polymerisierbares (Alk)acrylsäurederivat und gegebenenfalls ein oder mehrere radikalisch polymerisierbare, ethylenisch ungesättigte Comonomere umfasst, herstellt und
(b) das radikalisch polymerisierbare (Alk)acrylsäurederivat und das gegebenenfalls vorliegende eine bzw. die gegebenenfalls vorliegenden mehreren radikalisch polymerisierbaren, ethylenisch ungesättigten Comonomere radikalisch polymerisiert, wodurch man ein interkaliertes Polymer erhält;

wobei sich das polymere Koagulans von mindestens einem kationischen Monomer aus der Gruppe bestehend aus (Alk)acrylamidoalkyl-trialkylammoniumhalogeniden, (Alk)acryloyl-oxyalkyltrialkylammoniumhalogeniden und Alkenyltrialkylammoniumhalogeniden ableitet.

**2.** Verfahren nach Anspruch 1, bei dem es sich bei der öligen Substanz um einen aliphatischen Kohlenwasserstoff handelt.

**3.** Verfahren nach Anspruch 1 oder 2, bei dem der Wasser-in-Öl-Emulgator einen HLB-Wert im Bereich von 2 bis 9 aufweist.

**4.** Verfahren nach einem der vorhergehenden Ansprüche, bei dem es sich bei dem radikalisch polymerisierbaren (Alk) acrylsäurederivat um ein kationisches Monomer aus der Gruppe bestehend aus (Alk)acryl-amidoalkyltrialkylammoniumhalogeniden, (Alk)acryloyloxyalkyltrialkylammoniumhalogeniden, Alkenyltrialkylammoniumhalogeniden und Dialkenyldialkylammoniumhalogeniden handelt.

**5.** Verfahren nach einem der vorhergehenden Ansprüche, bei dem das eine oder die mehreren ethylenisch ungesättigten Comonomere (Alk)acrylamid umfassen.

**6.** Verfahren nach einem der vorhergehenden Ansprüche, bei dem der Gehalt des radikalisch polymerisierbaren (Alk) acrylsäurederivats im Bereich von 0,1 bis 50 Mol-%, bezogen auf die Gesamtmenge des radikalisch polymerisierbaren (Alk)acrylsäure-derivats und der radikalisch polymerisierbaren, ethylenisch ungesättigten Comonomere, liegt.

**7.** Verfahren nach einem der vorhergehenden Ansprüche, bei dem

- es sich bei der öligen Substanz um einen aliphatischen Kohlenwasserstoff mit 6 bis 30 Kohlenstoffatomen handelt und/oder
- sich das polymere Koagulans von einem oder mehreren Monomeren, die ein (Alk)acrylamido-alklytrialkylammoniumhalogenid umfassen, ableitet und/oder
- es sich bei dem radikalisch polymerisierbaren (Alk)acrylsäurederivat um ein (Alk)acryloyloxy-alkyltrialkylammoniumhalogenid handelt und/oder
- die radikalisch polymerisierbaren, ethylenisch ungesättigten Comonomere Acrylamid umfassen.

**8.** Wasser-in-Öl-Polymerdispersion, die Wasser, eine ölige Substanz, einen Wasser-in-Öl-Emulgator, ein polymeres Koagulans und ein interkaliertes Polymer umfasst, wobei die Dispersion nach dem Verfahren nach einem der Ansprüche 1 bis 7 erhältlich ist.

**9.** Wasser-in-Öl-Polymerdispersion nach Anspruch 8, wobei das gewichtsmittlere Molekulargewicht $M_w$ des interkalierten Polymers höher ist als das gewichtsmittlere Molekulargewicht $M_w$ des polymeren Koagulans.

**10.** Wasser-in-Öl-Polymerdispersion nach Anspruch 8 oder 9, die

- eine Lösungsviskosität im Bereich von 3.000 bis 20.000 mPas und/oder
- eine Salzviskosität von mindestens 750 mPas aufweist.

**11.** Wasser-in-Öl-Polymerdispersion nach einem der Ansprüche 8 bis 10, die

- 10 bis 90 Gew.-% Wasser;
- 0,1 bis 60 Gew.-% mindestens einer öligen Substanz;
- 0,1 bis 25 Gew.-% mindestens eines Wasser-in-Öl-Emulgators;
- 0,1 bis 30 Gew.-% mindestens eines polymeren Koagulans und
- mindestens ein interkaliertes Polymer, das sich von

- 0,1 bis 30 Ges.-% mindestens eines radikalisch polymerisierbaren (Alk)acrylsäure-derivats und
- 1,0 bis 90 Gew.-% mindestens eines radikalisch polymerisierbaren ethylenisch ungesättigten Comonomers

ableitet;
enthält, wobei sich alle Prozentangaben auf das Gesamtgewicht der Dispersion beziehen.

**12.** Verwendung der Wasser-in-Öl-Polymerdispersion nach einem der Ansprüche 8 bis 11 als Flockungsmittel.

**13.** Verfahren zur Herstellung von Papier, Pappe oder Karton, bei dem man die Wasser-in-Öl-Polymerdispersion nach einem der Ansprüche 8 bis 12 zu einer wässrigen Cellulosesuspension gibt.

**14.** Verfahren nach Anspruch 13, bei dem man ein weiteres polymeres Koagulans zu der Cellulosesuspension gibt.

## Revendications

**1.** Procédé d'élaboration d'une dispersion de polymère eau dans l'huile comprenant les étapes suivantes :

(a) élaboration d'une dispersion de monomère eau dans l'huile comprenant de l'eau, une substance huileuse, un émulsifiant eau dans l'huile, un coagulant polymère, un dérivé d'acide acrylique ou alkylacrylique polymérisable par voie radicalaire et éventuellement un ou plusieurs comonomères à insaturations éthyléniques polymérisables par voie radicalaire ; et
(b) polymérisation radicalaire du dérivé d'acide acrylique ou alkylacrylique polymérisable par voie radicalaire et des éventuels comonomères à insaturations éthyléniques polymérisables par voie radicalaire pour obtenir un polymère intercalé ;

où le coagulant polymère est dérivé d'au moins un monomère cationique choisi dans le groupe constitué par les halogénures d'acrylamidoalkyltrialkylammonium et d'alkylacrylamidoalkyltrialkylammonium, les halogénures d'acryloyloxyalkyltrialkylammonium et d'alkylacryloyloxyalkyltrialkylammonium et les halogénures d'alcényltrialkylammonium.

**2.** Procédé conforme à la revendication 1, où la substance huileuse est un hydrocarbure aliphatique.

**3.** Procédé conforme à la revendication 1 ou 2, où l'émulsifiant eau dans l'huile présente un indice HLB compris dans l'intervalle 2 à 9.

**4.** Procédé conforme à l'une quelconque des revendications précédentes, où le dérivé d'acide acrylique ou alkylacrylique polymérisable par voie radicalaire est un monomère cationique choisi dans le groupe constitué par les halogénures d'acrylamidoalkyltrialkylammonium et d'alkylacrylamidoalkyltrialkylammonium, les halogénures d'acryloyloxyalkyltrialkylammonium et d'alkylacryloyloxyalkyltrialkylammonium, les halogénures d'alcényltrialkylammonium et les halogénures de dialcényldialkylammonium.

**5.** Procédé conforme à l'une quelconque des revendications précédentes, où le ou les comonomères à insaturations éthyléniques comprennent un acrylamide ou un alkylacrylamide.

**6.** Procédé conforme à l'une quelconque des revendications précédentes, où la teneur en dérivé d'acide acrylique ou alkylacrylique polymérisable par voie radicalaire est comprise dans l'intervalle 0,1 à 50 % molaires, par rapport à la somme des teneurs en le dérivé d'acide acrylique ou alkylacrylique polymérisable par voie radicalaire et en les comonomères à insaturations éthyléniques polymérisables par voie radicalaire.

**7.** Procédé conforme à l'une quelconque des revendications précédentes, où

- la substance huileuse est un hydrocarbure aliphatique comportant entre 6 et 30 atomes de carbone ; et/ou
- le coagulant polymère est dérivé d'un ou de plusieurs monomères comprenant un halogénure d'acrylamidoalkyltrialkylammonium ou d'alkylacrylamidoalkyltrialkylammonium ; et/ou
- le dérivé d'acide acrylique ou alkylacrylique polymérisable par voie radicalaire est un halogénure d'acryloyloxyalkyltrialkylammonium ou d'alkylacryloyloxyalkyltrialkylammonium ; et/ou

- les comonomères à insaturations éthyléniques polymérisables par voie radicalaire comprennent un acrylamide.

**8.** Dispersion de polymère eau dans l'huile comprenant de l'eau, une substance huileuse, un émulsifiant eau dans l'huile, un coagulant polymère et un polymère intercalé, la dispersion pouvant être obtenue par le procédé conforme à l'une quelconque des revendications 1 à 7.

**9.** Dispersion de polymère eau dans l'huile conforme à la revendication 8, où la masse moléculaire moyenne en poids $M_w$ du polymère intercalé est supérieure à la masse moléculaire moyenne en poids $M_w$ du coagulant polymère.

**10.** Dispersion de polymère eau dans l'huile conforme à la revendication 8 ou 9, qui présente

- une viscosité de la solution comprise entre 3000 et 20 000 mPa.s ; et/ou
- une viscosité de sel d'au moins 750 mPa.s.

**11.** Dispersion de polymère eau dans l'huile conforme à l'une quelconque des revendications 8 à 10, qui inclut

- 10 à 90 % en masse d'eau ;
- 0,1 à 60 % en masse d'au moins une substance huileuse ;
- 0,1 à 25 % en masse d'au moins un émulsifiant eau dans l'huile ;
- 0,1 à 30 % en masse d'au moins un coagulant polymère ; et
- au moins un polymère intercalé dérivé de
- 0,1 à 30 % en masse d'au moins un dérivé d'acide acrylique ou alkylacrylique polymérisable par voie radiculaire ; et
- 1,0 à 90 % en masse d'au moins un comonomère à insaturations éthyléniques polymérisable par voie radicalaire, tous les pourcentages étant basés sur la masse totale de la dispersion.

**12.** Emploi de la dispersion de polymère eau dans l'huile conforme à l'une quelconque des revendications 8 à 11 au titre d'agent floculant.

**13.** Procédé de fabrication de papier ou de carton, le procédé comprenant l'étape d'ajout de la dispersion de polymère eau dans l'huile conforme à l'une quelconque des revendications 8 à 12 à une suspension cellulosique aqueuse.

**14.** Procédé conforme à la revendication 13, dans lequel un coagulant polymère supplémentaire est ajouté à la suspension cellulosique.

Figure 1

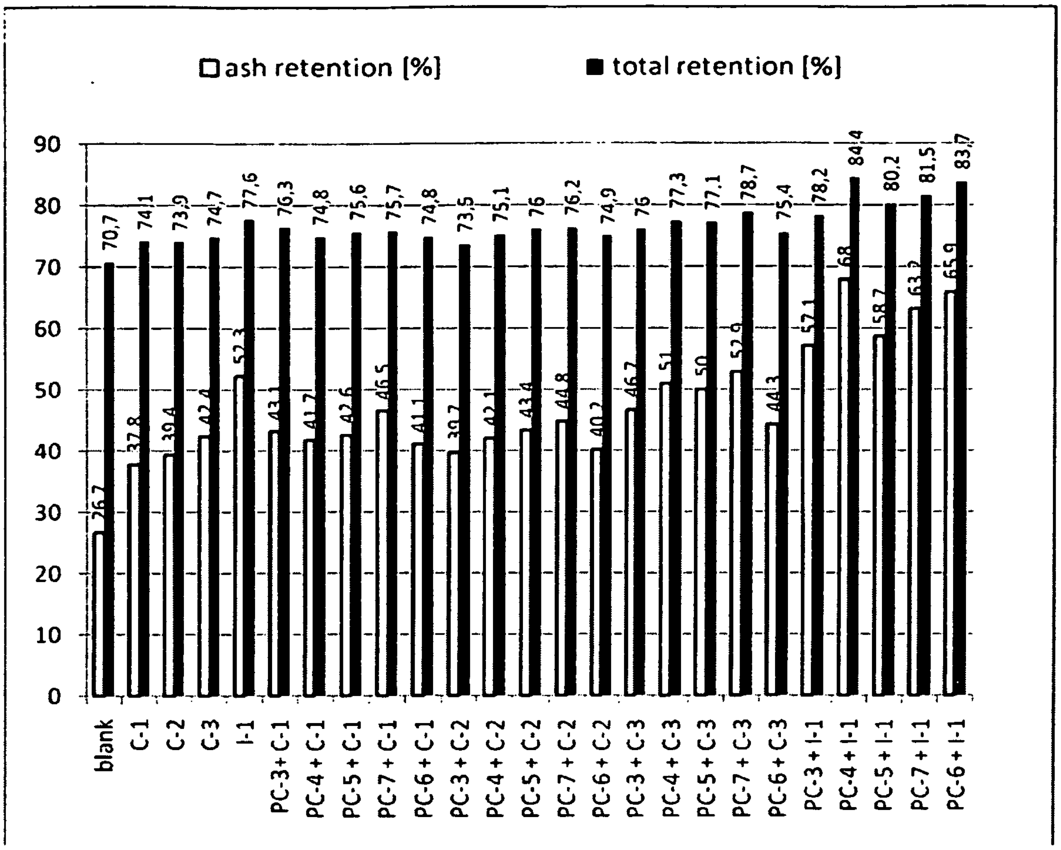


Figure 2

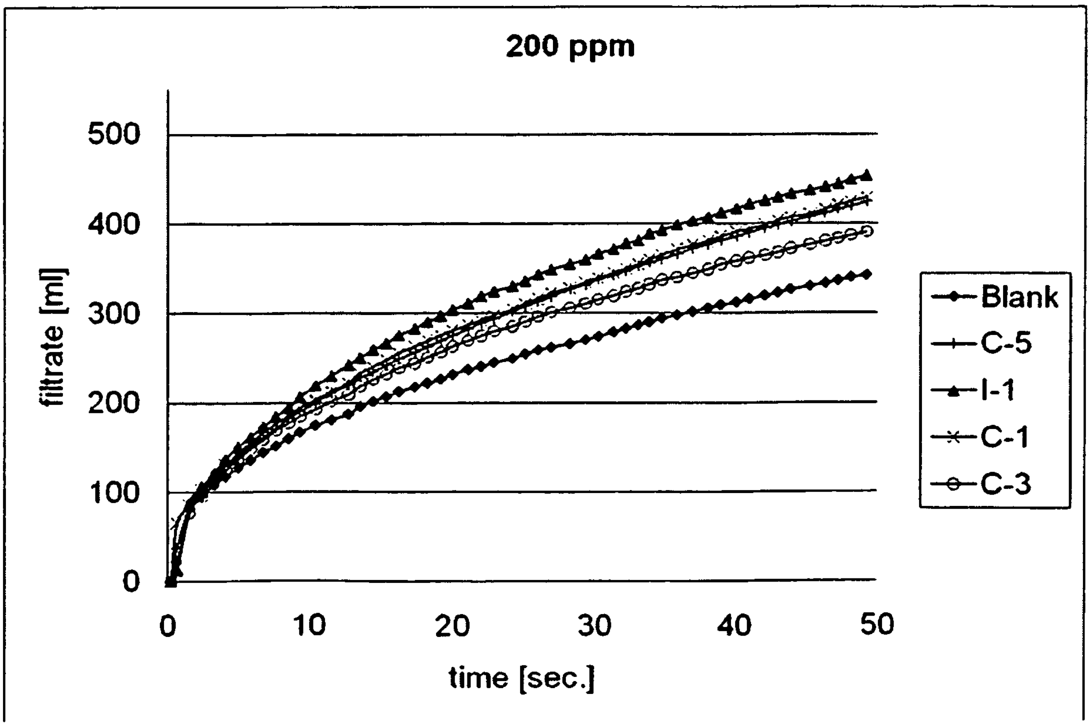

Figure 3

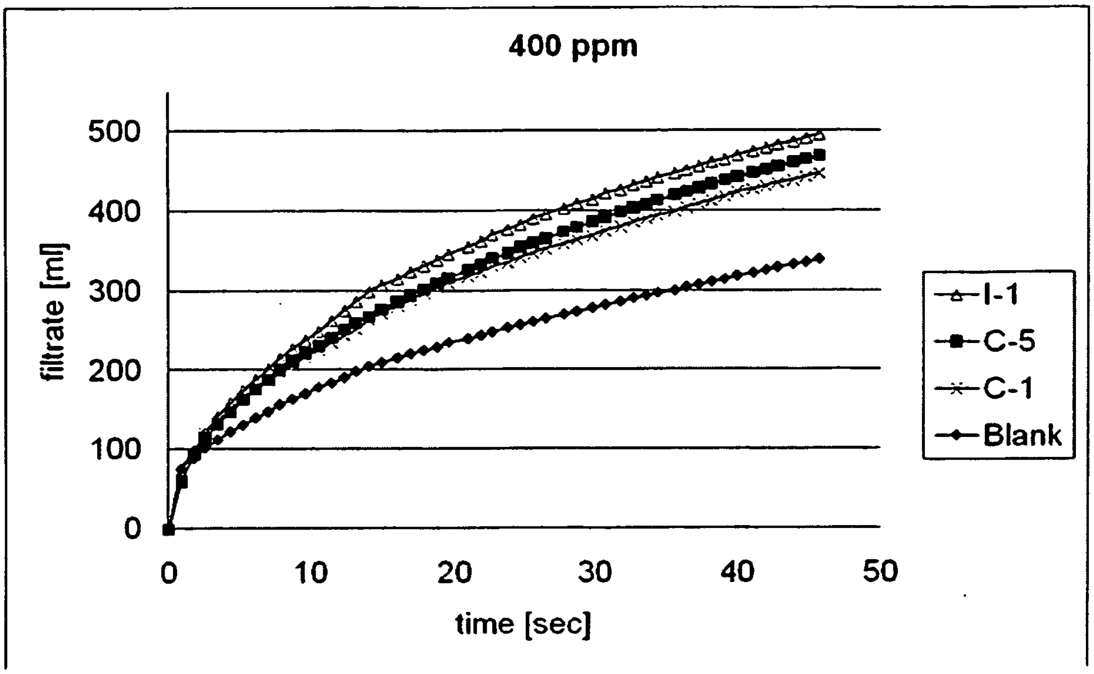


Figure 4

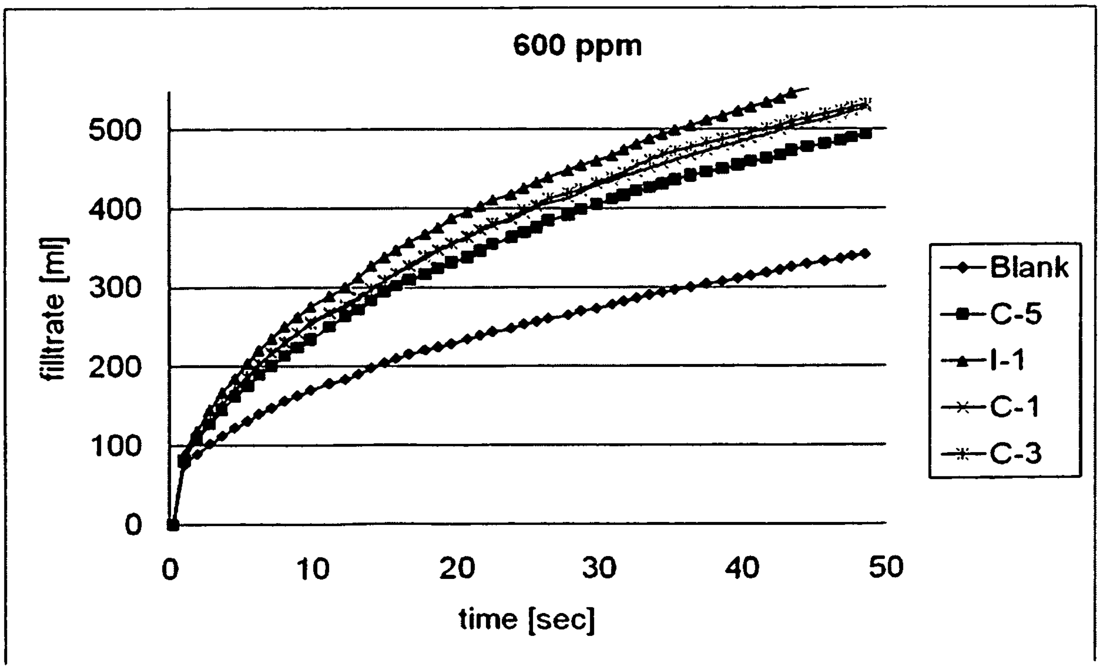

Figure 5

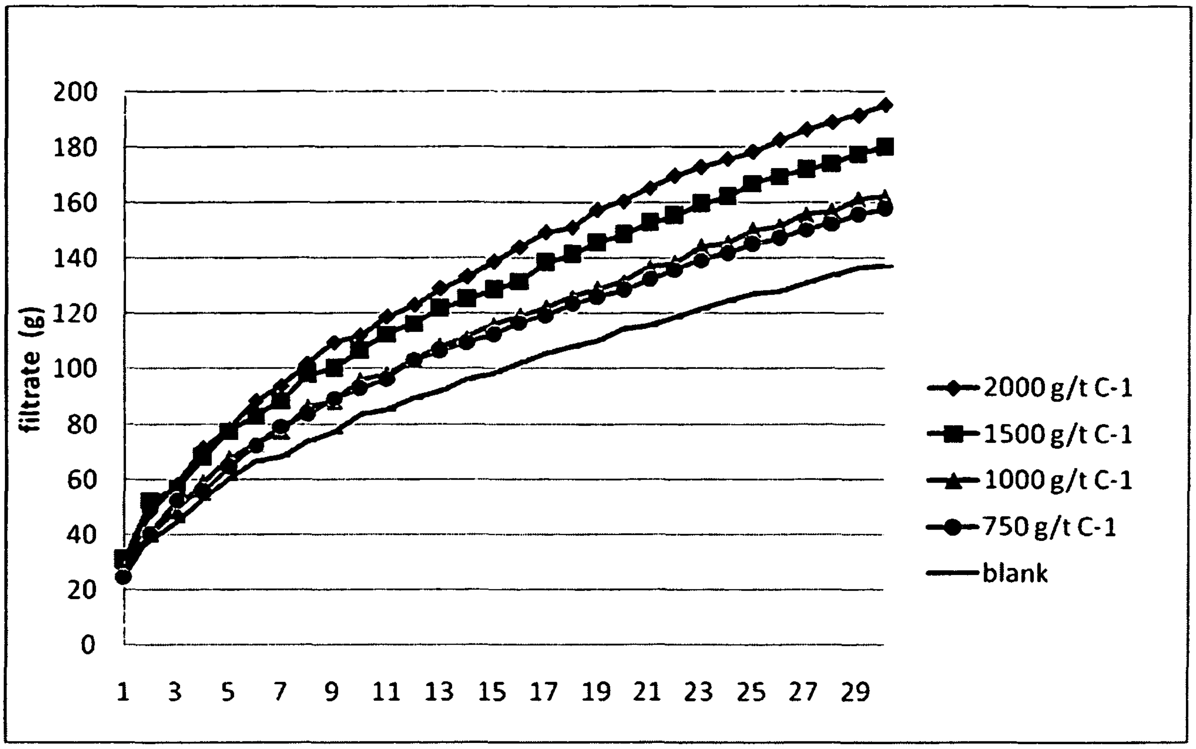


Figure 6

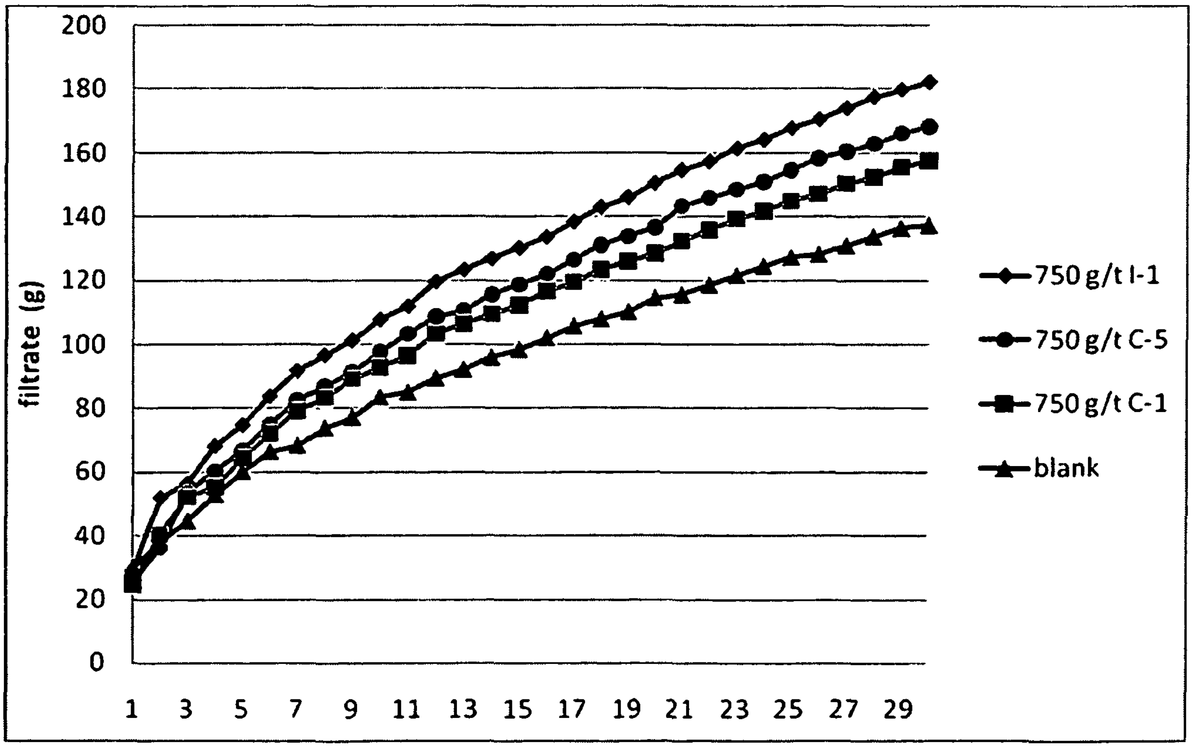

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5292800 A
- US 6117938 A
- EP 0262945 A
- US 20040034145 A
- WO 02083743 A
- US 20050183837 A
- EP 819651 A
- EP 807646 A
- US 2002188040 A